# EUROPEAN PATENT SPECIFICATION

(11) **EP 2 375 035 B1**
(45) Date of publication and mention of the grant of the patent: **15.02.2017**
(21) Application number: 11160344.5
(22) Date of filing: 30.03.2011
(51) Int. Cl.: F02D 41/00, F02B 29/04, F02M 31/04

(54) **Intake temperature control device for internal combustion engine**
Temperaturregelung für ein Ansaugsystem einer Brennkraftmaschine
Commande de la température pour un système d'admission d'un moteur

(30) Priority: 01.04.2010 JP 2010085051
(43) Date of publication of application: 12.10.2011
(73) Proprietor: Denso Corporation, Kariya-city, Aichi 448-8661 (JP)
(72) Inventor: Asano, Taichi, Kariya-city, Aichi 448-8661 (JP); Miyagawa, Masashi, Kariya-city, Aichi 448-8661 (JP); Harada, Kouichi, Kariya-city, Aichi 448-8661 (JP); Hata, Kenji, Kariya-city, Aichi 448-8661 (JP); Kakehashi, Nobuharu, Kariya-city, Aichi 448-8661 (JP)
(74) Representative: TBK

(56) References cited:
- EP-A1- 1 445 454
- JP-A- 2005 263 022
- US-A- 4 124 979
- US-A- 4 916 902
- US-A1- 2002 195 090

## Description

The present invention relates to an intake temperature control device for an internal combustion engine. The control device is applied to a vehicle including a supercharger that supercharges intake air, an inter cooler that cools the supercharged intake air through its heat exchange with cooling fluid, the engine to which the cooled intake air is supplied, and an actuator that regulates a flow rate of the cooling fluid to regulate the amount of heat, which is to be drawn per unit time from the intake air supercharged in the inter cooler.

Conventionally, a vehicle including a supercharger that supercharges intake air, and an internal combustion engine to which the supercharged intake air is supplied, is known. More specifically, charging efficiency of the intake air supplied to the engine is improved by increasing supercharging pressure of intake air, and torque generated by the engine is thereby increased. Accordingly, displacement of the engine required for generating the same torque is made small, so that downsizing of the engine can be achieved.

When the supercharging pressure for intake air is made high, intake air temperature becomes high. As a result, knocking may occur, or a degree of improvement in the charging efficiency of intake a may be reduced. For this reason, as described in JP-A-2001-065345, those having an inter cooler for cooling intake air supercharged by a supercharger are also known for the above-described vehicle. More specifically, temperature of the intake air is decreased by drawing heat from the intake air through cooling fluid in the inter cooler, and an intake air density is thereby improved. Accordingly, the generation of knocking can be inhabited, or the charging efficiency for intake air can be further improved. See as well EP 1 445 454 A1.

Because the temperature of intake air varies according to a supercharged state of the intake air, if the intake air cannot be appropriately cooled in the inter cooler in accordance with this supercharged state, the increase in intake air temperature sometimes cannot be appropriately restrained. In this case, there is concern that a combustion state of the engine deteriorates, such as reduction of the torque generated by the engine or of acceleration responsiveness of the vehicle, due to a decline in the charging efficiency of intake air.

The present invention addresses at least one of the above disadvantages.

Thus, it is an objective of the present invention to provide an intake temperature control device for an internal combustion engine that can improve a combustion state of an internal combustion engine by improvement of accuracy in adjustment of intake air temperature.

To achieve the objective of the present invention, there is provided an intake temperature control device for an internal combustion engine according to claim 1. The control device is adapted for a vehicle including a supercharger, an inter cooler, the engine, and an actuator. The supercharger is configured to supercharge intake air. The inter cooler is configured to cool the supercharged intake air through heat exchange between the supercharged intake air and cooling fluid. The cooled intake air is supplied to the engine. The actuator is configured to regulate a flow rate of the cooling fluid to adjust an amount of heat taken per unit time away from the supercharged intake air in the inter cooler. The control device includes a flow rate setting means and an operating means. The flow rate setting means is for setting the flow rate of the cooling fluid at a larger value as an output of the engine becomes higher, provided that a request to cool the intake air, which is supplied to the engine, is made. The operating means is for operating the actuator in order that an actual flow rate of the cooling fluid reaches the flow rate which is set by the flow rate setting means.

To achieve the objective of the present invention, there is also provided an intake temperature control device for an internal combustion engine according to claim 6. The control device is adapted for a vehicle including a supercharger, a water-cooled inter cooler, the engine, a radiator, and a water pump. The supercharger is configured to supercharge intake air. The water-cooled inter cooler is configured to cool the supercharged intake air through heat exchange between the supercharged intake air and cooling water. The cooled intake air is supplied to the engine. The radiator is configured to perform heat release from the cooling water, whose heat has been exchanged with the supercharged intake air, by means of a wind blown into the vehicle due to travel of the vehicle. The water pump is configured to regulate a flow rate of the cooling water flowing through the inter cooler. The control device includes a preparing means and a replacing means. The preparing means is for preparing low-temperature cooling water, which is to be supplied to the inter cooler, under condition of an output of the engine being equal to or lower than a specified output. The replacing means is for replacing the cooling water in the inter cooler with the cooling water prepared by the preparing means prior to increase of the output of the engine and for operating the water pump to limit an amount of the cooling water flowing into and out of the inter cooler.

The invention, together with additional objectives, features and advantages thereof, will be best understood from the following description, the appended claims and the accompanying drawings in which:
FIG. 1 is a diagram of a system configuration in accordance with a first embodiment of the invention;
FIG. 2A is a diagram roughly illustrating a configuration of an LT radiator in accordance with the first embodiment;
FIG. 2B is a diagram roughly illustrating the configuration of the LT radiator in accordance with the first embodiment;
FIG. 3 is a flow chart illustrating a procedure for basic flow rate control processing in accordance with the first embodiment;
FIG. 4A is a diagram showing a general description of a setting method for a base flow rate in accordance with the first embodiment;
FIG. 4B is a diagram showing a general description of a setting method for target IC inlet water temperature in accordance with the first embodiment;
FIG. 5 is a flow chart illustrating a procedure for pre-acceleration replacement control processing in accordance with the first embodiment;
FIG. 6 is a timing diagram illustrating measurement results of an arrival time at a certain intake pressure in accordance with the first embodiment;
FIG. 7 is a diagram illustrating measurement results of a relationship between intake temperature and the arrival time at the certain intake pressure in accordance with the first embodiment;
FIG. 8 is a timing diagram illustrating general description of the pre-acceleration replacement control processing in accordance with the first embodiment;
FIG. 9 is a timing diagram illustrating general description of pre-acceleration replacement control processing in accordance with a second embodiment of the invention; and
FIG. 10 is a flow chart illustrating a procedure for pre-acceleration replacement control processing in accordance with a third embodiment of the invention.

### (First Embodiment)

A first embodiment of the invention, in which a control device of the invention is applied to a vehicle (automobile) provided with an internal combustion engine having a supercharger (turbocharger), will be described below with reference to the accompanying drawings.

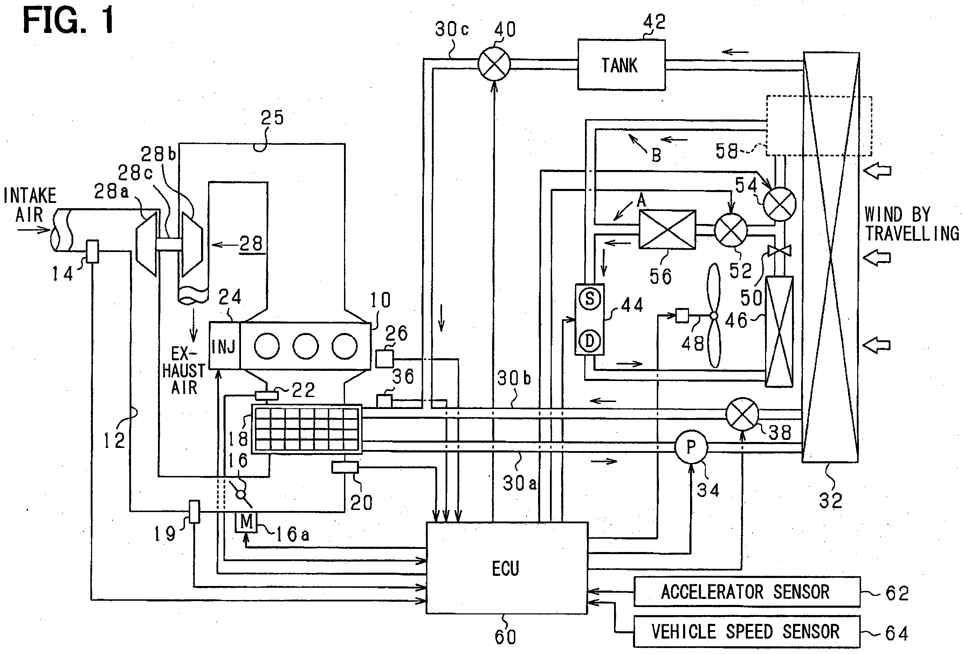

The entire configurations of an engine system and an air-conditioning system of the present embodiment are illustrated in FIG. 1.

As illustrated in FIG. 1, an air flow meter 14 that detects the amount of air suctioned (intake air amount), a throttle valve 16 whose degree of opening (throttle opening degree) is regulated by a throttle actuator 16a such as a DC motor, and a water-cooled inter cooler 18 that cools intake, air are provided, in this order from the upstream side, for an intake passage 12 of an engine 10. A supercharging pressure sensor 19 for detecting intake pressure (supercharging pressure) is disposed on the upstream side of the throttle valve 16. On the upstream side and downstream side of the inter cooler 18, an inlet intake temperature sensor 20, which detects intake temperature (IC inlet intake temperature) on the upstream side of the inter cooler 18, and an outlet intake temperature sensor 22, which detects intake temperature (IC outlet intake temperature) on the downstream side of the inter cooler 18, are respectively provided.

An injector 24 for supplying fuel into a combustion chamber of the engine 10 is provided for each cylinder of the engine 10. An air-fuel mixture between the fuel supplied from the injector 24 and the intake air cooled by the inter cooler 18 is supplied into the combustion chamber of the engine 10. Energy generated by combustion of the air-fuel mixture is taken out as rotational energy of an output shaft (crankshaft: not shown) of the engine 10. The air-fuel mixture employed for the combustion is discharged into an exhaust passage 25 as exhaust gas. A crank angle sensor 26 that detects a rotation angle of the crankshaft is disposed around the crankshaft.

A turbocharger 28 is provided between the intake passage 12 and the exhaust passage 25. The turbocharger 28 includes an intake compressor 28a provided in the intake passage 12, an exhaust turbine 28b provided in the exhaust passage 25, and a rotatable shaft 28c which couples these together. More specifically, the exhaust turbine 28b is rotated by energy of exhaust gas flowing through the exhaust passage 25; this rotational energy is transmitted to the intake compressor 28a through the rotatable shaft 28c; and the intake air is compressed by the intake compressor 28a. Accordingly, the intake air is supercharged by the turbocharger 28. The supercharging pressure of the intake air is regulated through the operation of an air bypass valve (not shown) that is disposed in a passage bypassing between a upstream portion and downstream portion of the intake compressor 28a in the intake passage 12, or a waste gate valve (not shown) that is disposed in a passage bypassing between an upstream portion and downstream portion of the exhaust turbine 28b in the exhaust passage 25.

The intake air supercharged by the turbocharger 28 is cooled through its heat exchange with cooling water flowing in the inter cooler 18. Accordingly, an intake air density is increased, so that charging efficiency for the intake air supplied to the combustion chamber of the engine 10 is improved.

The inter cooler 18 is connected to a radiator (LT radiator 32) through a coolant passage, which is constituted of an outward passage 30a, a return passage 30b, and a bypass passage 30c. The LT radiator 32 performs heat release from the cooling water whose heat has been exchanged in the inter cooler 18 using wind blown due to travelling of the vehicle (travel wind). More specifically, an electric pump 34 which pressure-feeds cooling water is provided for the outward passage 30a, and the cooling water circulates between the inter cooler 18 and the LT radiator 32 (i.e., LT circuit) via the coolant passage by the drive of the electric pump 34. Therefore, the cooling water conducts heat away from the intake air while flowing through the inter cooler 18, and the cooling water is then introduced into the LT radiator 32 via the outward passage 30a of the coolant passage. After this cooling water is cooled by the LT radiator 32, the cooling water is again returned into the inter cooler 18 through the return passage 30b or bypass passage 30c of the coolant passage. Accordingly, the intake air is cooled. In the present embodiment, a pump that can continuously variably set the discharge amount (flow rate of cooling water) of the pump 34 is assumed for the electric pump 34. An IC inlet water temperature sensor 36 for detecting temperature (IC inlet water temperature) of the cooling water flowing into the inter cooler 18 is disposed on the cooling-water inlet side of the inter cooler 18.

A return passage valve 38 and a bypass valve 40, which are electronic controlled type valving elements that open or close in accordance with presence or absence of energization thereof, are provided respectively for the return passage 30b and the bypass passage 30c. In the present embodiment, a normally-closed type valve that is opened upon energization thereof and closed when the energization is stopped is assumed for these valves. The downstream side of the bypass passage 30c is connected to the downstream side of the return passage valve 38 in the return passage 30b. A storage tank 42 that stores the cooling water, which flows out of the LT radiator 32 as a result of this valve 40 being put into a valve-closing state, is disposed at a portion of the bypass passage 30c on the upstream side of the bypass valve 40.

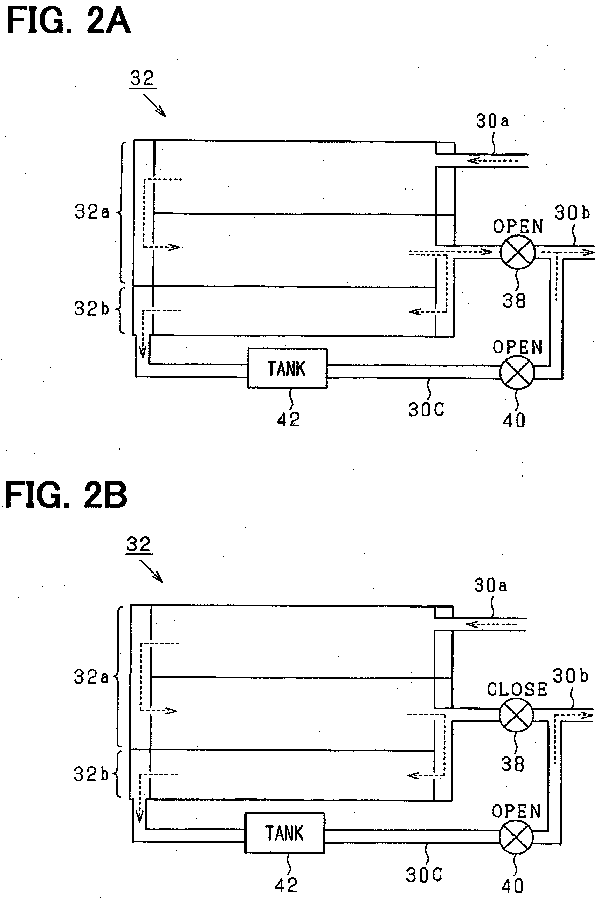

As illustrated in FIGS. 2A and 2B, the LT radiator 32 includes a normal cooling unit 32a for releasing heat from the cooling water flowing into the radiator 32, and a supercooling unit 32b for further releasing heat from the cooling water, whose heat has been exchanged in the normal cooling unit 32a. More specifically, the inlet side of the normal cooling unit 32a is connected to the outward passage 30a, and the outlet side of the normal cooling unit 32a is connected to the inlet side of the supercooling unit 32b and the return passage 30b. On the other hand, the outlet side of the supercooling unit 32b is connected to a portion of the return passage 30b on the downstream side of the return passage valve 38 through the bypass passage 30c, the storage tank 42, and the bypass valve 40.

A mode of supply of the cooling water to the normal cooling unit 32a and the supercooling unit 32b is determined in accordance with the switchings of the return passage valve 38 and the bypass valve 40. More specifically, as illustrated in FIG. 2A, if both the return passage valve 38 and the bypass valve 40 are opened, the cooling water flowing into the normal cooling unit 32a from the outward passage 30a is cooled in the normal cooling unit 32a. Part of the cooled cooling water flows out into the return passage 30b, and the remaining part of the cooling water flows into the supercooling unit 32b. After the cooling water, which has flowed into the supercooling unit 32b, is further cooled, the cooling water flows out into the return passage 30b through the bypass passage 30c, for example.

As illustrated in FIG. 2B, if the return passage valve 38 is closed and the bypass valve 40 is opened, all of the cooling water, which flows into the normal cooling unit 32a from the outward passage 30a, is cooled in both the normal cooling unit 32a and the supercooling unit 32b, and then flows out into the return passage 30b via, for example, the bypass passage 30c.

When the valves are operated as in FIG. 2B, a degree of cooling of the cooling water in the LT radiator 32 is made high as compared with the case of the operation of the valves as in FIG. 2A. Accordingly, temperature of the cooling water flowing out of the LT radiator 32 can be further lowered.

Description returns to the reference to FIG. 1. The above-described air-conditioning system includes a refrigerant circulating route (vehicle interior side refrigerant circulating route A) for cooling a vehicle interior, and a refrigerant circulating route (LT side refrigerant circulating route B) for cooling the cooling water in the LT radiator 32. The vehicle interior side refrigerant circulating route A and the LT-side refrigerant circulating route B include in common a compressor 44 that draws and discharges refrigerant to circulate the refrigerant, a condenser 46 in which the refrigerant discharged and supplied from this compressor 44 is condensed, a receiver (not shown) into which the condensed refrigerant flows, and so forth.

The refrigerant discharged from the compressor 44 is supplied to the condenser 46. The condenser 46 is disposed on the vehicle rear side of the LT radiator 32 together with a radiator (EG radiator: not shown) for releasing heat from the cooling water which cools the engine 10. More specifically, the condenser 46 is a member in which the heat exchange is performed between an airflow formed by a fan 48 rotated by such as a DC motor or the travel wind; and the refrigerant discharged and supplied from the compressor 44. Gas liquid separation is performed by the above-described receiver upon the refrigerant which has flowed out of the condenser 46. The separated liquid refrigerant is rapidly expanded by a temperature type expansion valve 50, and thereby put into a misty state. When the fan 48 is rotated, the airflow is formed around the LT radiator 32 and the EG radiator in addition to the condenser 46. Accordingly, the heat release from the cooling water in the LT radiator 32 and the EG radiator is promoted.

It is determined in accordance with switching between an A/C valve 52 and an LT cooling valve 54 through which of the vehicle interior side refrigerant circulating route A and the LT-side refrigerant circulating route B the refrigerant circulates. The A/C valve 52 and the LT cooling valve 54 are, similar to the above-described return passage valve 38, for example, electronic-controlled type valving elements that are opened or closed in accordance with presence or absence of energization thereof. The valves 52, 54 are normally-closed type valves.

If the A/C valve 52 is opened and the LT cooling valve 54 is closed, the vehicle interior is cooled as a result of the circulation of the refrigerant through the vehicle interior side refrigerant circulating route A. More specifically, the refrigerant, which is put into a misty state by the temperature type expansion valve 50, is supplied to an evaporator (vehicle interior side evaporator 56) that cools the air in the vehicle interior. The supplied refrigerant is evaporated through its heat exchange in the vehicle interior side evaporator 56, and the evaporated refrigerant is suctioned into a suction port of the compressor 44.

On the other hand, if the A/C valve 52 is closed and the LT cooling valve 54 is opened, the cooling water in the LT radiator 32 is cooled as a result of the circulation of the refrigerant through the LT-side refrigerant circulating route B. More specifically, the refrigerant, which is put into a misty state by the temperature type expansion valve 50 is supplied to an evaporator (LT-side evaporator 58) that cools the cooling water in the LT radiator 32. In the LT-side evaporator 58, the refrigerant is evaporated as a result of the heat exchange between the cooling water in the LT radiator 32 and the refrigerant that is put into a misty state. Accordingly, the cooling water in the LT radiator 32 is cooled. The refrigerant evaporated in the LT-side evaporator 58 is suctioned into the suction port of the compressor 44.

An electronic control unit (hereinafter referred to as an ECU 60) with the engine system and air-conditioning system as its operation target, is constituted mainly of a microcomputer including a widely-known central processing unit (CPU), read-only memory (ROM), and random access memory (RAM). Output signals from an accelerator sensor 62 for detecting the operation amount of an accelerator by a driver of the vehicle, a vehicle speed sensor 64 for detecting a travel speed of the vehicle, the air flow meter 14, the supercharging pressure sensor 19, the inlet intake temperature sensor 20, the outlet intake temperature sensor 22, the crank angle sensor 26, the IC inlet water temperature sensor 36 and so forth; and furthermore, information about an operation state of the throttle valve 16, are inputted into the ECU 60. The ECU 60 may perform fuel injection control by the injector 24, suction amount control by the throttle actuator 16a, supercharging pressure control by the air bypass valve and waste gate valve, switching controf of the return passage valve 38 and so forth, and furthermore, air conditioning control through operations of various devices in the air-conditioning system, through the execution of various kinds of control programs stored in the ROM in accordance with these inputs.

The suction amount control performs energizing operation upon the throttle actuator 16a to set the throttle opening degree at its minimum value when the operation amount of the accelerator based on the output value from the accelerator sensor 62 is 0 (zero); and to make larger the throttle opening degree as the accelerator operation amount becomes larger. To explain the fuel injection control, the fuel injection control performs energizing operation upon the injector 24 to make larger a fuel injection quantity from the injector 24 as the accelerator operation amount becomes larger.

Although each of the engine system and air-conditioning system is actually operated by a corresponding one of separate electronic control units, here, this pair of electronic control units is described as the ECU 60.

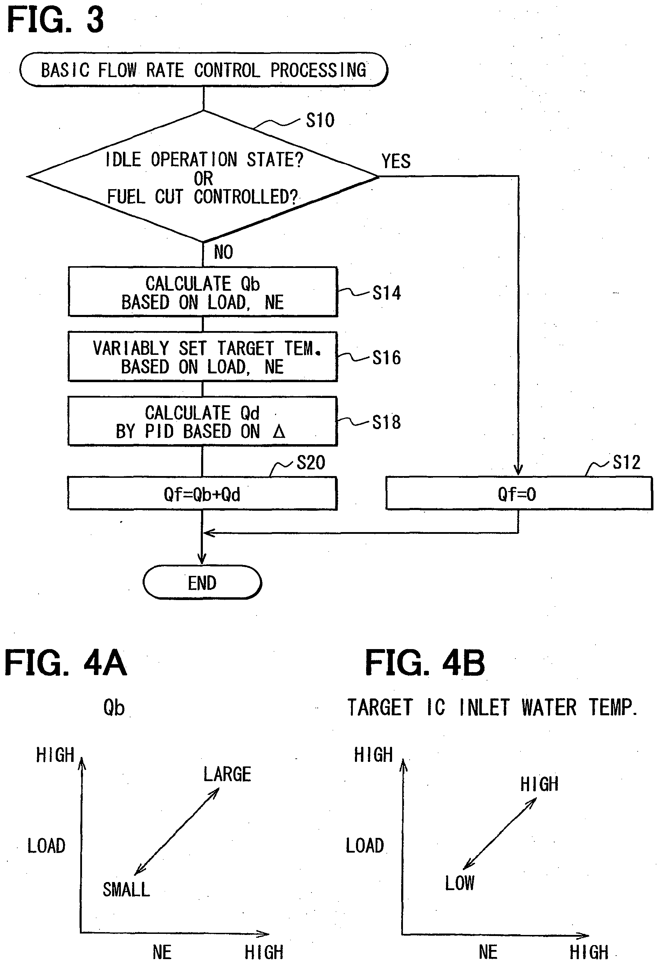

Particularly, the ECU 60 performs the basic flow rate control processing that controls the IC inlet water temperature with this IC inlet water temperature as a direct controlled variable, to control the intake temperature of the engine 10. The basic flow rate control processing will be described in full detail below in reference to FIGS. 3 to 4B.

A procedure for the basic flow rate control processing of the present embodiment is illustrated in FIG. 3. This processing is repeatedly executed by the ECU 60 in a predetermined cycle, for example. In the present embodiment, both the return passage valve 38 and the bypass valve 40 are opened in a period during which the basic flow rate control processing is executed.

In this series of processings, first, at S10, whether the engine 10 is in an idle operation state; or whether fuel cut control, which is control that stops the fuel injection from the injector 24, is in execution, is determined. This processing is processing for determining whether a request to cool intake air in the inter cooler 18 is made. Normally, in an idle operation state, the throttle opening degree is set at its minimum value, and the displacement is made small. As a result of the small displacement, the intake air is not supercharged by the turbocharger 28, so that the intake temperature does not rise greatly. Accordingly, the request for cooling of the intake air is not made. Also, while the fuel cut control is in execution, the combustion is stopped, so that the request for cooling of the intake air is not made. Additionally, the fuel cut control is executed if it is determined that logical multiplication between a condition that the accelerator operation is not performed and a condition that an engine rotation speed exceeds a specified speed is true. The engine rotation speed may be calculated based on the output value from the crank angle sensor 26.

If it is determined at S10 that the vehicle is in an idle operation state or that the fuel cut control is in execution, it is determined that no request for cooling of the intake air is made. Then, at S12, a command flow rate Qf, which is a command value for a flow rate of the electric pump 34, is set at 0 (zero). Accordingly, the electric pump 34 is stopped, and circulation of the cooling water in the LT circuit is stopped.

On the other hand, if negative determination is made at S10, it is determined that the request for cooling of the intake air is made. Then, at S14 to S20, the command flow rate Qf of the electric pump 34 and a target value (target IC inlet water temperature) of the IC inlet water temperature, which are required in making appropriate a combustion state of the engine 10 or charging efficiency for the intake air, are calculated.

More specifically, at S14, a base flow rate Qb, which is a command value for a basic flow rate of the electric pump 34, is calculated from an engine load, which is the intake air amount based on the output value from the air flow meter 14, and the engine rotation speed NE. In the present embodiment, as illustrated in FIG. 4A, the base flow rate Qb is set to be higher as the engine load and the engine rotation speed NE become higher (as the output of the engine 10 is higher). This is a setting for appropriately adjusting the amount of heat taken away from the intake air per unit time in the inter cooler 18. As the output of the engine 10 is higher, the amount of intake air passing through the inter cooler 18 per unit time becomes larger. Thus, the amount of heat required to reduce the intake temperature by a predetermined temperature in the inter cooler 18 becomes larger. When a flow rate of the cooling water is increased, heat exchange between the intake air and cooling water in the inter cooler 18 is promoted, and the amount of heat that the cooling water draws from the intake air per unit time increases. For this reason, the intake air is cooled appropriately by setting the base flow rate Qb in the above-described manner. In the above-described invention, in view of this regard, the amount of heat required to reduce the intake temperature can be appropriately covered by making larger the flow rate of cooling fluid as the output of the internal combustion engine is higher. Accordingly, accuracy in adjustment of the intake temperature can be improved, and eventually, a combustion state of the engine can be made satisfactory.

By the above-described setting method for the base flow rate Qb, the base flow rate Qb is set to be smaller as the output of the engine 10 becomes lower. Accordingly, consumed electric power due to the drive of the electric pump 34 can also be reduced. Specifically, the base flow rate Qb may be calculated using a steady map in which a relationship between the engine load and the engine rotation speed NE; and the base flow rate Qb is specified. The steady map gives the flow rate of cooling water that is required in making appropriate the combustion state or charging efficiency in a steady state (state in which sufficient time has elapsed after controlled variables for various actuators are fixed), as the base flow rate Qb. The steady map is produced beforehand as a result of adaptability through experiment or the like.

At S16, the target IC inlet water temperature (or target intake temperature) is variably set based on the engine load and the engine rotation speed NE. In the present embodiment, as illustrated in FIG. 4B, when the engine load and the engine rotation speed NE are high, the target IC inlet water temperature is set to be high. This is a configuration for setting the target IC inlet water temperature at a temperature that is assumed to be achieved by the base flow rate Qb in the steady state. More specifically, as the output of the engine 10 becomes higher, the amount of intake air passing through the inter cooler 18 per unit time is larger, and a heat exchanging quantity between the intake air and cooling water in the inter cooler 18 is thereby larger. Since there is an upper limit to the amount of heat release from the cooling water in the LT radiator 32, the temperature of cooling water is allowed to be high in a situation in which the heat exchanging quantity between the intake air and cooling water is large.

Specifically, the target IC inlet water temperature may be calculated using a steady map in which a relationship between the engine load and the engine rotation speed NE; and the target IC inlet water temperature is specified. Moreover, the target IC inlet water temperature may be set in consideration of outdoor temperature. In this case, when the outdoor temperature decreases, a degree of cooling of the cooling water in the LT radiator 32 becomes high, and the IC inlet water temperature is thereby lowered. In view of this, the target IC inlet water temperature may be set to be lower as the outdoor temperature becomes lower.

At S18, the command value (FB flow rate Qd) for the flow rate of the electric pump 34, for feedback-controlling the IC inlet water temperature based on the output value of the IC inlet water temperature sensor 36, to be the target IC inlet water temperature that is set in the processing at S16, is calculated. In the present embodiment, a temperature difference Δ is calculated as a value obtained by subtraction of the target IC inlet water temperature from the IC inlet water temperature (or Δ= IC outlet intake temperature - target intake temperature), and the FB flow rate Qd is calculated through proportional plus integral plus derivative control (PID) based on the calculated temperature difference Δ. This processing is for compensating the flow rate of the cooling water in a transient state in consideration that open-loop control with the base flow rate Qb as the operation amount assumes the steady state. More specifically, when the output of the engine 10 changes from a high state into a low state, for example, the amount of heat drawn from the intake air in the inter cooler 18 is reduced due to a decrease of the base flow rate Qb. Although the target IC inlet water temperature decreases because of the reduction of the output of the engine 10, the IC inlet water temperature does not immediately decline due to the magnitude of the heat capacity of the cooling water in the LT circuit. Therefore, in a period until the IC inlet water temperature reaches the target IC inlet water temperature, the amount of heat drawn from the intake air in the inter cooler 18 may become smaller than the assumed amount, and the IC inlet water temperature may become higher than the temperature that is assumed to be achieved by the base flow rate Qb. Accordingly, if the IC inlet water temperature exceeds the target IC inlet water temperature, the amount of heat that the cooling water takes away from the intake air in the inter cooler 18 is increased through increasing the flow rate of the cooling water flowing through the inter cooler 18 by the FB flow rate Qd.

At S20, the command flow rate Qf is calculated as an additional value of the base flow rate Qb and the FB flow rate Qd. Then, based on the command flow rate Qf, energizing operation is performed upon the electric pump 34.

If the processing at S12, S20 is completed, this series of processings are temporarily ended.

As a result of the basic flow rate control processing, the IC outlet intake temperature can be controlled basically at a temperature that makes appropriate the combustion state of the engine 10 and the charging efficiency of the intake air. However, it is found that because insufficient cooling of the intake air in the inter cooler 18 is caused in an acceleration state from a state (low speed area) in which the travel speed of the vehicle is smaller than a predetermined low speed, the charging efficiency of the intake air is reduced, More specifically, by making high the supercharging pressure to increase the torque generated by the engine 10 in the acceleration state from the low speed area, the IC inlet intake temperature rises in a short period of time, and the intake air sometimes cannot be sufficiency cooled in the inter cooler 18 In this case, as a result of the decrease of the charging efficiency for the intake air, and reduction of the torque generated by the engine 10, driveability of the vehicle may deteriorate. For example, acceleration travelling of the vehicle that the driver of the vehicle intends cannot be realized.

Particularly, if the supercharging pressure is set to be higher in the acceleration state from the low speed area in order to downsize the engine 10, a rate of the rise of the intake temperature becomes faster, so that reduction in the charging efficiency for the intake air may become marked.

In order to resolve such a problem, in regard to a method of promoting the cooling of intake air in the acceleration state from the low speed area, a full examination and experiment have been conducted. As a result, it is found that cooling of the intake air can be promoted, and charging efficiency of the intake air can be improved in the acceleration state from the low speed area, through the execution of the following pre-acceleration replacement control processing.

More specifically, in the pre-acceleration replacement control processing, to begin with, when a travelling state of the vehicle is a deceleration state, processing for stopping the electric pump 34 is carried out to forcibly set the flow rate of cooling water at 0 (zero). Accordingly, by locally cooling the cooling water of those in the LT circuit that remains within the LT radiator 32 by the travel wind in the deceleration state, a degree of reduction in the temperature of the cooling water in the LT radiator 32 is made large, and low-temperature cooling water, which is to be supplied to the inter cooler 18, is prepared.

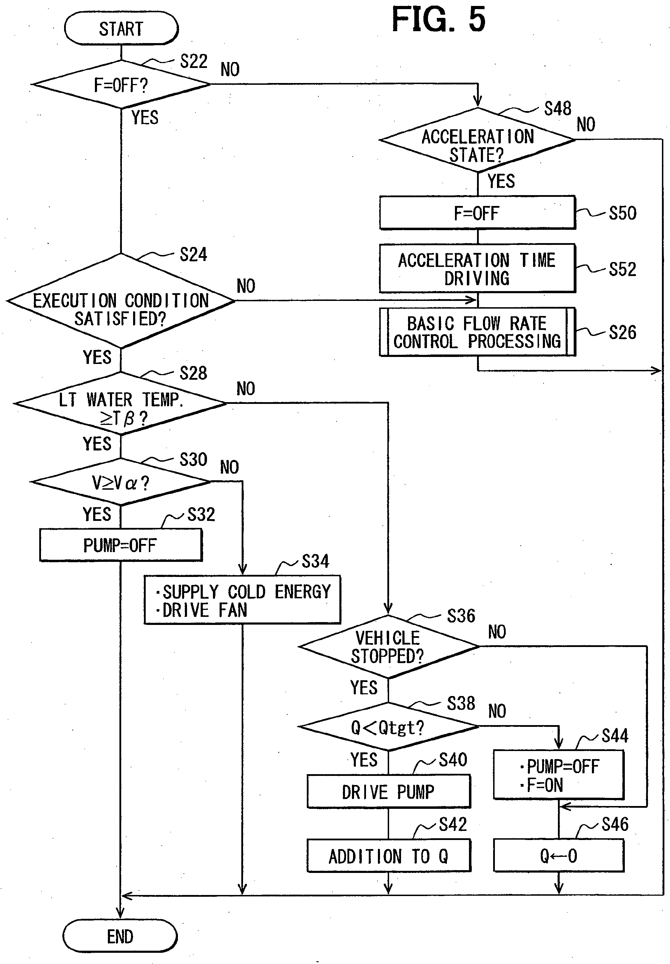

Then, prior to the vehicle being put into the acceleration state in a vehicle stop state immediately after the processing for stopping the electric pump 34, a state, in which the cooling water in the inter cooler 18 is replaced with the low-temperature cooling water prepared in the LT radiator 32 in a period for the above stop of the pump 34, is created; and also, processing for operating the electric pump 34 to limit the amount of inflow-outflow cooling water of the inter cooler 18 is performed. Accordingly, when the vehicle is put into the acceleration state from the low speed area thereafter, a state in which the low-temperature cooling water remains as much as possible within the inter cooler 18 is accomplished. As a result, the amount of heat that the cooling water takes away from the intake air in the inter cooler 18 is increased, and charging efficiency of the intake air is thereby improved. The pre-acceleration replacement control processing will be described below in full detail with reference to FIGS. 5 to 7.

A procedure for the pre-acceleration replacement control processing of the present embodiment is illustrated in FIG. 5. This processing is repeatedly executed by the ECU 60 in a predetermined cycle, for example.

In this series of processings, first, at S22, it is determined whether a replacement completion flag F is turned off. This processing is for determining whether the pre-acceleration replacement control processing is completed, so that the cooling water in the inter cooler 18 has been replaced by the low-temperature cooling water. The replacement completion flag F indicates that the pre-acceleration replacement control processing has not been completed yet with "OFF"; and indicates that this processing has been completed with "ON".

If it is determined at S22 that the replacement completion flag F is "OFF", control proceeds to S24 to determine whether an execution condition for the pre-acceleration replacement control processing is satisfied. In the present embodiment, if logical multiplication of the following conditions (A) to (C) is determined to be true, it is determined that the above execution condition is satisfied.
(A) Condition that a travelling state of the vehicle is in a deceleration state or stop state. The condition of this condition (A) that the travelling state is in a deceleration state is made for determining whether the processing for stopping the electric pump 34 is executable. Under the circumstances in which the travelling state of the vehicle is in a deceleration state, the accelerator is not operated by the driver, so that the fuel cut control is executed to stop the combustion. When the combustion is stopped, the intake air is no longer supercharged by the turbocharger 28, and it thereby becomes unnecessary to supply cooling water to the inter cooler 18. Accordingly, the electric pump 34 can be stopped.
   On the other hand, the one of the above condition (A) that the travelling state is in a stop state is made for determining whether the electric pump 34 is to be driven to refill the inter cooler 18 with the cooling water after preparation of the low-temperature cooling water is completed. Whether the travelling state of the vehicle is in a deceleration state may be determined based on whether a rate of change of the travel speed of the vehicle has a negative value. Whether the travelling state is in a stop state may be determined based on whether the travel speed of the vehicle is 0 (zero). The travel speed of the vehicle may be calculated based on the output value of the vehicle speed sensor 64, and the rate of change may be calculated based on a derivation value for the output value from the sensor 64.
(B) Condition that a state, in which the output of the engine 10 is a predetermined output W (>0) or higher, is continued for a predetermined time or longer. This condition is made for performing the pre-acceleration replacement control processing in a situation in which decrease of the amount of heat drawn from the intake air in the inter cooler 18 can be marked. More specifically, if the basic flow rate control processing is continued in a state in which the output of the engine 10 is high, the heat exchanging quantity between the intake air and cooling water in the inter cooler 18 is made large, so that the temperature of cooling water becomes high totally within the LT circuit. Here, even when the output of the engine 10 declines due to the vehicle thereafter being put into a deceleration state, and the heat exchanging quantity in the inter cooler 18 thereby decreases, the IC inlet water temperature does not immediately fall due to the magnitude of the heat capacity of the cooling water in the LT circuit. Under such a situation, as a result of the target IC inlet water temperature being set to be low through the basic flow rate control processing, the temperature difference Δ is made large. Although the flow rate of cooling water is increased through the feedback control, the vehicle is thereafter put into the acceleration state from the low speed area because the IC inlet water temperature is high. In the above-described case, the decrease of the amount of heat taken away from the intake air may become marked. For this reason, by providing the condition (B), a concern that the decrease of the amount of heat taken away from the intake air becomes marked is resolved by the replacement of cooling water in the inter cooler 18.
(C) Condition that the temperature difference Δ is a specified temperature difference ΔTα (e.g., 3°C) (>0) or higher. This condition is made to the similar effect to the above-described condition (B). If a degree with which the IC inlet water temperature exceeds the target IC inlet water temperature is high, the decrease of the amount of heat drawn from the intake air in the inter cooler 18 may become marked when the vehicle is thereafter put into the acceleration state from the low speed area.

If it is determined at S24 that the execution condition is not satisfied, control proceeds to S26 to carry out the basic flow rate control processing.

On the other hand, if it is determined at S24 that the execution condition is satisfied, the pre-acceleration replacement control processing is performed at S28 to S46. Specifically, it is determined at S28 whether an LT water temperature, which is the temperature of the cooling water in the LT radiator 32, is higher than a specified temperature Tβ (>0). This processing is for determining whether the present LT water temperature has fallen properly to such a temperature that the intake air can be cooled in the acceleration state from the low speed area through the processings at S32, S34, which are described in greater detail hereinafter. Additionally, since the present LT water temperature is estimated by different methods respectively in accordance with whether the processing at S32 is performed or whether the processing at S34 is performed, this will be described in greater detail hereinafter.

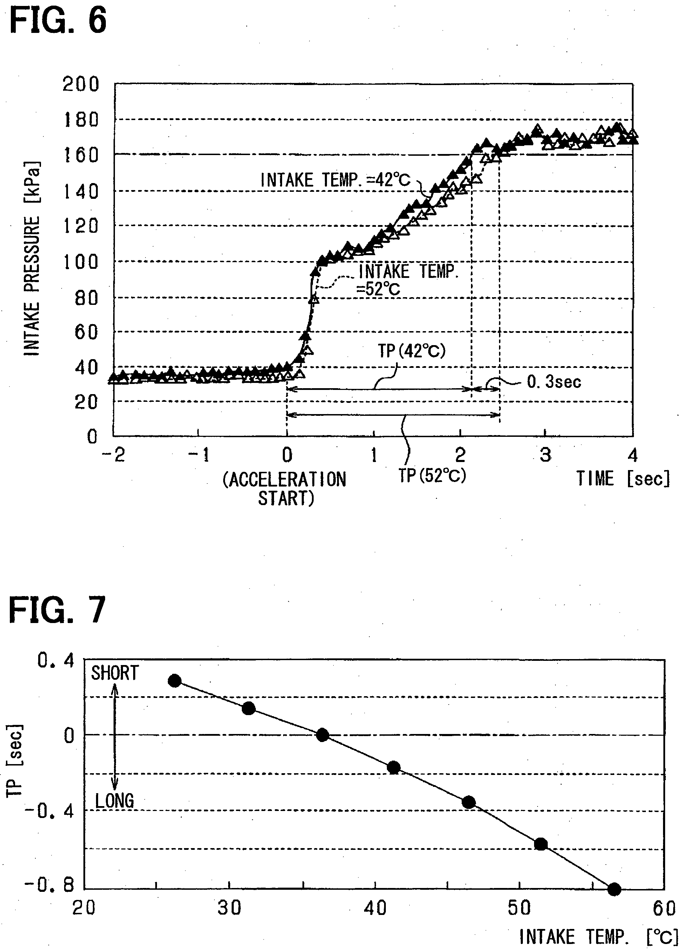

In the present embodiment, the specified temperature Tβ is set as a temperature that is lower than the IC inlet water temperature immediately before positive determination is made at S24, by 3 degrees or more. This is setting for improving acceleration responsiveness of the vehicle to the extent that the driver can feel the acceleration in the acceleration state from the low speed area, and based on measurement results illustrated in FIGS. 6 and 7 described below.

Transition of the pressure of intake air supplied to the engine 10 in the case of different IC outlet intake temperatures is illustrated in FIG. 6. More specifically, FIG. 6 is the measurement result of transition of the intake pressure in the case of the acceleration of the vehicle from a state in which the engine rotation speed is a constant rotation speed (e.g., 1500 pm); and the travel speed of the vehicle is a constant speed (e.g., 25 km/h).

As illustrated in FIG. 6, a certain intake pressure arrival time TP, which is a period after the vehicle starts acceleration until the intake pressure reaches its target value (e.g., maximum supercharging pressure of the intake air by the turbocharger 28, for example, 160 kPa), is shorter by 0.3 sec in the case of the IC outlet intake temperature of 42°C (indicated with black triangles in FIG. 6) than in the case of the IC outlet intake temperature of 52°C (indicated with while triangles in FIG. 6). That is, the charging efficiency of the intake air improves, so that acceleration responsiveness of the vehicle improves.

Measurement results of the certain intake pressure arrival time TP in a case in which the IC outlet intake temperature is changed variously with test conditions for the travel speed of the vehicle and the engine rotation speed being those similar to the above-described test conditions in FIG. 6 are illustrated in FIG. 7. In FIG. 7, the certain intake pressure arrival time TP in the case of the IC outlet intake temperature being 37°C is set at a reference value (0); and a period shorter than the reference value is set to be positive, and a period longer than the reference value is set to be negative.

As illustrated in FIG. 7, the certain intake pressure arrival time TP becomes shorter as the IC outlet intake temperature is lower. Specifically, when the IC outlet intake temperature decreases by 10°C, the certain intake pressure arrival time TP becomes shorter by 0.3 sec. As a result of the experimentations, it is found that the driver can feel the improvement in acceleration responsiveness of the vehicle when the certain intake pressure arrival time TP becomes shorter by about 0.1 sec; and that a decrease amount of the IC inlet water temperature and a decrease amount of the IC outlet intake temperature are generally the same. For this reason, by setting the specified temperature Tβ in the above-described manner, acceleration responsiveness of the vehicle is improved to the extent that the driver can feel the acceleration in the acceleration state from the low speed area.

Description returns to the reference to FIG. 5. If it is determined at S28 that the LT water temperature is the specified temperature Tβ or higher, it is determined that cooling of the cooling water in the LT radiator 32 is insufficient. Then, it is determined at S30 whether the travel speed V of the vehicle is a specified speed Vα (>0) or higher. This processing is a processing for determining whether the cooling water in the LT radiator 32 can be cooled by the travel wind in a deceleration state. That is, when the travel speed V of the vehicle is reduced, air volume of the travel wind decreases, so that the cooling water in the LT radiator 32 cannot be appropriately cooled.

If it is determined at S30 that the travel speed V of the vehicle is the specified speed Vα or higher, it is determined that the cooling water in the LT radiator 32 can be cooled by the travel wind, and processing that stops the electric pump 34 is performed at S32. Accordingly, circulation of the cooling water in the LT circuit is stopped.

In the present embodiment, the LT water temperature each time while the processing at S32 is in progress is estimated based on an estimate value of the LT water temperature immediately before the electric pump 34 is stopped, and the amount of decrease of the LT water temperature by the travel wind (deceleration water temperature decrease amount) in the case in which the electric pump 34 is stopped and the vehicle is put into a deceleration state. More specifically, the estimate value of the LT water temperature immediately before the stop of the pump 34 is calculated as an additional value of a value obtained as a result of the addition of a detection value of the IC inlet water temperature to the amount of rise in temperature of the cooling water in the inter cooler 18 through the heat exchange between the cooling water and intake air; and the amount of decrease of the LT water temperature by the travel wind. In more detail, the amount of rise in temperature may be calculated based on a difference between the IC inlet intake temperature based on the output value from the inlet intake temperature sensor 20 and the IC outlet intake temperature based on the output value from the outlet intake temperature sensor 22; a drive state of the electric pump 34 (flow rate of the cooling water flowing through the inter cooler 18); and the intake air amount. The amount of decrease of the LT water temperature by the travel wind may be calculated based on the travel speed of the vehicle (air volume of the travel wind), characteristics of the LT radiator 32 (e.g., heat release area), and the drive state of the electric pump 34. The above-described deceleration water temperature decrease amount is calculated based on the travel speed of the vehicle and the characteristics of the LT radiator 32.

If it is determined at S30 that the travel speed V of the vehicle is smaller than the specified speed Vα, it is determined that the cooling water in the LT radiator 32 cannot be cooled any more by the travel wind to perform processing for at least one of a cold energy supply and drive of the fan 48 at S34. The cold energy supply is processing for energizing operation of the compressor 44, the A/C valve 52, and the LT cooling valve 54 to cool the cooling water in the LT radiator 32 by the heat of refrigerant in a refrigeration cycle. More specifically, the refrigerant is circulated through the LT-side refrigerant circulating route B by driving the compressor 44 with the A/C valve 52 in a valve-closing state as well as the LT cooling valve 54 in a valve-opening state. Accordingly, the LT water temperature is reduced by the heat exchange between the refrigerant and cooling water in the LT-side evaporator 58. If a request to control the cooling is made during the processing for the cold energy supply, the A/C valve 52 may be put into a valve-opening state.

Processing for the drive of the fan 48 is processing for energizing operation of the fan 48 to cool the cooling water in the LT radiator 32 by forcibly increasing a rotational speed of the fan 48. More specifically, the amount of air passing through the LT radiator 32 becomes large by the increase of the rotational speed of the fan 48, so that heat release of the cooling water in the LT radiator 32 is promoted. Hence, a degree of reduction in temperature of the cooling water in the LT radiator 32 is made high. In more detail, the processing for the drive of the fan may be processing for forcibly rotating the fan 48 if the fan 48 is stopped at the present calculating timing; or for further increasing the present rotational speed of the fan 48 if the fan 48 has already been rotated.

In the present embodiment, it may be determined in accordance with the LT water temperature, for example, whether both the cold energy supply processing and the fan drive processing are performed; or which of these processings is performed. The LT water temperature each time during the cold energy supply processing or the fan drive processing is estimated as an additional value of the LT water temperature estimated immediately therebefore in the processing at S32 or the estimate value of the LT water temperature immediately before the electric pump 34 is stopped; and the amount of decrease of the LT water temperature due to the cold energy supply processing or the fan drive processing. The decrease amount of the LT water temperature by the cold energy supply processing may be estimated based on the heat exchanging quantity between the refrigerant in the refrigeration cycle and the cooling water in the LT radiator 32. More specifically, the decrease amount of the LT water temperature may be estimated based on a refrigerant temperature difference between the outlet and inlet of the LT-side evaporator 58, a flow rate of the refrigerant supplied to the LT-side evaporator 58, and so forth. The decrease amount of the LT water temperature by the fan drive processing may be estimated based on the drive state of the fan 48 and the characteristics of the LT radiator 32.

When the LT water temperature decreases by the processings at S32, S34, it is determined at S28 that the LT water temperature is lower than the specified temperature Tβ, and it is thereby determined that low-temperature cooling water is prepared in the LT radiator 32. In this case, control proceeds to S36 to determine whether the travelling state is in a stop state. This processing is for determining whether the present state is a situation in which the cooling water in the inter cooler 18 is replaced by the low-temperature cooling water prepared in the LT radiator 32.

If it is determined at S36 that the travelling state is in a stop state, control proceeds to S38 to determine whether an accumulated amount of water Q is smaller than a specified amount of water Qtgt. The accumulated water amount Q is the actual amount of cooling water that has moved from an outlet of the supercooling unit 32b toward the inter cooler 18 because of the drive of the electric pump 34. This processing is for determining whether the refill of the inter cooler 18 with the low-temperature cooling water in the LT radiator 32 has been completed. The specified amount of water Qtgt may be set based on a volume of the bypass passage 30c, a volume of the return passage 30b from its connecting portion with the bypass passage 30c to a cooling water inlet of the inter cooler 18, and a volume of the coolant passage in the inter cooler 18.

If it is determined at S38 that the accumulated water amount Q is smaller than the specified amount of water Qtgt, it is determined that the replacement of the cooling water in the inter cooler 18 has not been completed yet, and the command flow rate Qf of the electric pump 34 per unit time is set at a predetermined flow rate at S40. In the present embodiment, energizing operation of these valves is carried out to close the return passage valve 38 as well as to open the bypass valve 40; while S40 is in processing. This processing is for properly supplying the low-temperature cooling water from the LT radiator 32 to the inter cooler 18. The basic flow rate control processing is performed before the pre-acceleration replacement control processing is performed, so that both the return passage valve 38 and the bypass valve 40 are opened. Accordingly, the cooling water cooled in the normal cooling unit 32a flows out to the return passage 30b, and the cooling water cooled in the supercooling unit 32b flows out to the bypass passage 30c. Since the temperature of cooling water cooled in the supercooling unit 32b is lower than the temperature of cooling water cooled in the normal cooling unit 32a, the temperature of cooling water in the bypass passage 30c is lower than the temperature of cooling water in the return passage 30b. Therefore, even lower-temperature cooling water is supplied to the inter cooler 18 as a result of the energizing operation of the valves in the above-described manner.

At S42, the predetermined flow rate is added to the accumulated water amount Q. The predetermined flow rate may be calculated as a value obtained, for example, as a result of multiplying the command flow rate Qf of the electric pump 34 per unit time by a processing cycle of the ECU 60. The accumulated water amount Q is stored each time in the memory of the ECU 60.

If it is determined at S38 that the accumulated water amount Q is equal to or larger than the specified water amount Qtgt, it is determined that the replacement of the cooling water in the inter cooler 18 has been completed. Then, the electric pump 34 is stopped, and the replacement completion flag F is switched on at S44.

If negative determination is made at S36 (i.e., in the case in which the vehicle starts to travel during the pre-acceleration replacement control processing), or in the case of completion of the processing at S44, control proceeds to S46 to clear the accumulated amount of water Q stored in the memory (to set the amount Q to be zero).

If it is determined at S22 that the replacement completion flag F is switched on upon completion of the pre-acceleration replacement control processing, control proceeds to S48 to determine whether the travelling state of the vehicle is in an acceleration state. This processing is for determining whether the vehicle is in the acceleration state from the low speed area, which is a state in which the output of the engine 10 increases. Whether the travelling state of the vehicle is in an acceleration state may be determined based on whether an increase rate of the accelerator operation amount ACCP (throttle opening degree, intake air amount, supercharging pressure, intake temperature, NE, or V) exceeds a predetermined speed Vβ (>0). The increase rate of the accelerator operation amount ACCP may be calculated based on a derivation value of the output value of the accelerator sensor 62.

If it is determined at S48 that the travelling state of the vehicle is in an acceleration state, control proceeds to S50 to turn off the replacement completion flag F.

At S52, processing for acceleration time drive is performed. In the present embodiment, the processing for acceleration time drive is processing whereby the return passage valve 38 is closed and the bypass valve 40 is opened; and a state in which the command flow rate Qf of the electric pump 34 per unit time is set at a predetermined low flow rate is continued for a predetermined time (e.g., five seconds). This is because the low-temperature cooling water is made to exist as much as possible in the inter cooler 18 in a situation in which the vehicle is put into the acceleration state from the low speed area. For example, if the flow rate of the electric pump 34 is increased from the timing with which acceleration of the vehicle is started, the cooling water, whose heat exchange with the intake air is not sufficiently carried out, flows out of the inter cooler 18 to the outward passage 30a; or all the low-temperature cooling water that exists in the inter cooler 18 and the bypass passage 30c flows out to the outward passage 30a at the timing with which a rising degree of the IC inlet intake temperature becomes high. As a result, the amount of heat that the cooling water takes away from the intake air in the inter cooler 18 may be reduced. Accordingly, by driving the electric pump 34 in the above-described manner, the low-temperature cooling water is made to exist as much as possible in the inter cooler 18 in the acceleration state from the low speed area to increase the amount of heat that the cooling water takes away from the intake air.

In the case of completion of the processing at S52, control proceeds to S26 to perform the basic flow rate control processing.

If negative determination is made at S48, or if the processing at S26, S32, S34, S42, or S46 is completed, this series of processings are temporarily ended.

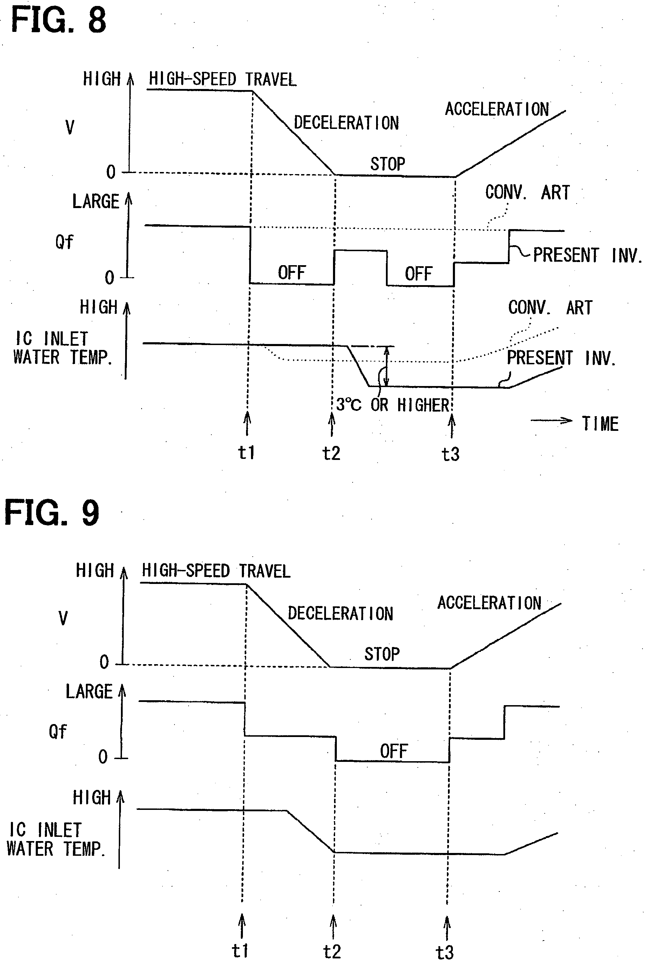

Change of the travel speed V of the vehicle is illustrated in the first diagram of FIG. 8; change of the command flow rate Qf of the electric pump 34 is illustrated in the second diagram of FIG. 8; and change of the IC inlet water temperature is illustrated in the third diagram of FIG. 8.

As illustrated in FIG. 8, upon determination at time t1 that the travelling state of the vehicle is put into a deceleration state, the pre-acceleration replacement control processing is started to stop the electric pump 34. Accordingly, cooling of the cooling water in the LT radiator 32 is promoted, and the low-temperature cooling water is prepared. After that, the electric pump 34 is driven from time t2 at which the vehicle is put into a stop state until the accumulated water amount Q reaches the specified water amount Qtgt or larger, so that the cooling water in the inter cooler 18 is replaced by the prepared low-temperature cooling water. As a result, temperature of the cooling water in the inter cooler 18 decreases by 3°C or more. Then, the travelling state of the vehicle is put into an acceleration state at time t3, so that a state in which the command flow rate Qf of the electric pump 34 per unit time is set at a predetermined low flow rate through the acceleration time drive processing is continued for a predetermined time. Accordingly, when the vehicle is put into the acceleration state from the low speed area, the amount of heat that the cooling water conducts heat away from the intake air in the inter cooler 18 can be increased.

An example of a drive mode of the electric pump 34 of a conventional technology is indicated together by a dotted line in FIG. 8. In the conventional technology, the cooling water continues circulating in the LT circuit because the electric pump 34 continues to be driven also during a period in which the travelling state of the vehicle is in a deceleration state and in a stop state. Accordingly, a part of the cooling water in the LT circuit cannot be locally cooled in the LT radiator 32, and a degree of reduction in IC inlet water temperature thereby becomes low after the deceleration state in which air volume of the travel wind is reduced. Thus, decrease in the amount of heat that the cooling water conducts heat away from the intake air in the inter cooler 18 when the vehicle is thereafter put into the acceleration state from the low speed area becomes marked.

As described above, in the present embodiment, through the execution of the basic flow rate control processing or through the execution of the pre-acceleration replacement control processing in accordance with the travelling state of the vehicle, the intake air can be cooled appropriately in the inter cooler 18. As a result, the combustion state of the engine 10 is made satisfactory, and charging efficiency of the intake air can be improved.

As a result of the present embodiment described above, the following effects are produced.

Firstly, the basic flow rate control processing, which performs energizing operation of the electric pump 34 based on the command flow rate Qf, is carried out. The command flow rate Qf for the electric pump 34 is calculated as the addition value of the base flow rate Qb that is calculated based on the engine load and the engine rotation speed NE, and the FB flow rate Qd that is calculated based on the temperature difference Δ between the target IC inlet water temperature and the IC inlet water temperature. Accordingly, the amount of heat that the cooling water conducts heat away from the intake air in the inter cooler 18 can be appropriately adjusted. Eventually, the IC outlet intake temperature is controllable at the temperature that makes appropriate the combustion state of the engine 10 and the charging efficiency of the intake air.

Secondly, the pre-acceleration replacement control processing whereby the electric pump 34 is stopped to forcibly set the flow rate of cooling water at 0 (zero) when the travelling state of the vehicle is put into a deceleration state; and whereby the electric pump 34 is operated to replace the cooling water in the inter cooler 18 with the low-temperature cooling water in the LT radiator 32 in a stop state thereafter, is carried out. Accordingly, when the vehicle is put into the acceleration state from the low speed area, the amount of heat that the cooling water conducts heat away from the intake air in the inter cooler 18 can be increased, so that the charging efficiency of the intake air can be improved suitably. As a result, the torque generated by the engine 10 can be suitably increased, and eventually, driveability of the vehicle can be improved suitably.

Thirdly, the execution condition for the pre-acceleration replacement control processing is specified as a condition that logical multiplication between the above-described conditions (A) to (C) is true. Accordingly, the pre-acceleration replacement control processing can be performed under the circumstance in which the processing for stopping the electric pump 34 is executable; or under the circumstance in which the decrease in the amount of heat that the cooling water conducts heat away from the intake air can be marked.

Fourthly, if it is determined that the cooling water in the LT radiator 32 cannot be appropriately cooled by the travel wind during the pre-acceleration replacement control processing, the cold energy supply processing or the fan drive processing is executed. Accordingly, the cooling water in the LT radiator 32 for the refill of the inter cooler 18 can be prepared appropriately.

Fifthly, and lastly, the acceleration time drive processing which continues for a predetermined time the state in which the command flow rate Qf of the electric pump 34 per unit time is set at a predetermined low flow rate in the acceleration state from the low speed area, is performed. Accordingly, when the vehicle is put into the acceleration state from the low speed area, the intake air can be cooled appropriately in the inter cooler 18, and eventually, the charging efficiency of the intake air can be more suitably improved.

### (Second Embodiment)

A second embodiment of the invention will be described below with reference to the accompanying drawings with its focus on differences from the above first embodiment.

In the present embodiment, instead of the processing for stopping the electric pump 34 to forcibly set the flow rate of cooling water at 0 (zero), processing that forcibly reduces a command flow rate Qf of an electric pump 34 to a flow rate that is larger than 0 (zero) is carried out as driving processing of the electric pump 34 at S32 in FIG. 5. More specifically, processing for setting the command flow rate Qf of the electric pump 34 at a flow rate smaller than the command flow rate Qf, which has been set by basic flow rate control processing immediately therebefore, is executed. Accordingly, in the case in which a travelling state of a vehicle turns into a deceleration state, by limiting the amount of high-temperature cooling water flowing into an LT radiator 32 to improve temperature effectiveness of the LT radiator 32, a degree of reduction in temperature of cooling water flowing out of the LT radiator 32 is made high.

First to third diagrams of FIG. 9 correspond to the first to third diagrams of FIG. 8.

As illustrated in FIG. 9, the command flow rate Qf of the electric pump 34 is forcibly reduced upon start of pre-acceleration replacement control processing at time t1. Accordingly, cooling of the cooling water in the LT radiator 32 is promoted, so that low-temperature cooling water is prepared. After that, the electric pump 34 is driven until an accumulated water amount Q reaches a specified water amount Qtgt or larger. Then, the electric pump 34 is stopped. As a result, a state in which cooling water in an inter cooler 18 is replaced with the low-temperature cooling water is maintained. Subsequently, acceleration time drive processing is started upon change of the travelling state of the vehicle to an acceleration state at time t3.

As described above, in the present embodiment, through the execution of the processing that forcibly reduces the command flow rate Qf of the electric pump 34 to a flow rate that is larger than 0 in the pre-acceleration replacement control processing, the low-temperature cooling water can be provided in preparation for the acceleration state from a low speed area.

### (Third Embodiment)

A third embodiment of the invention will be described below with reference to the accompanying drawings with its focus on differences from the above first embodiment.

In the present embodiment, in a period during which basic flow rate control processing is executed, a return passage valve 38 is opened and a bypass valve 40 is closed; and low-temperature (about outdoor temperature) cooling water that has been cooled in a supercooling unit 32b is accumulated in a storage tank 42. Accordingly, the low-temperature cooling water is prepared. Then, as pre-acceleration replacement control processing, processing for operating an electric pump 34 is carried out to replace cooling water in an inter cooler 18 by the low-temperature cooling water prepared in the storage tank 42.

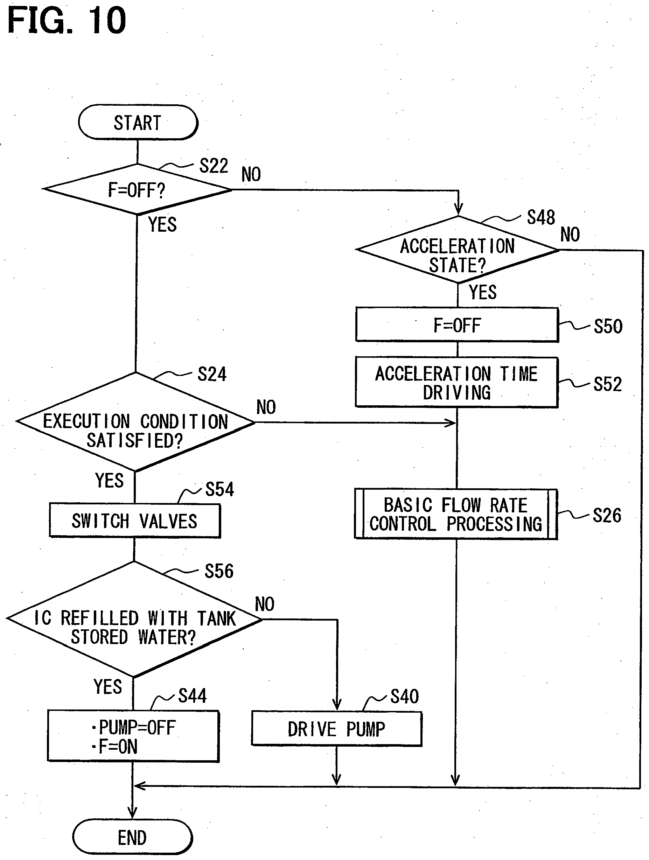

The processing in FIG. 10 is repeatedly executed by an ECU 60 in a predetermined cycle, for example. In FIG. 10, for processing corresponding to the processing illustrated in FIG. 5, the same step number as FIG. 5 is used for convenience' sake.

In this series of processings, if it is determined at S24 that an execution condition for the pre-acceleration replacement control processing is satisfied, the pre-acceleration replacement control processing is started, and valve switching for closing the return passage valve 38 and for opening the bypass valve 40 is performed at S54. This processing is for supplying the low-temperature cooling water prepared in the storage tank 42 to the inter cooler 18.

It is determined at S56 whether the replacement of the cooling water in the inter cooler 18 by the low-temperature cooling water prepared in the storage tank 42 has been completed. Specifically, it is determined whether an accumulated water amount Q, which is the amount of actual cooling water that has moved from an outlet of the storage tank 42 toward the inter cooler 18 by the drive of the electric pump 34, is equal to or larger than a specified water amount Qtgt. The specified water amount Qtgt may be set based on a volume of a bypass passage 30c on the downstream side of the storage tank 42, a volume of a return passage 30b from its connecting portion with the bypass passage 30c to a cooling water inlet of the inter cooler 18, and a volume of a coolant passage in the inter cooler 18.

If it is determined at S56 that the refill of the inter cooler 18 with the low-temperature cooling water prepared in the storage tank 42 has not been completed, control proceeds to S40 to set a command flow rate Qf of the electric pump 34 per unit time at a predetermined flow rate.

On the other hand, if it is determined at S56 that the replacement of cooling water has been completed, control proceeds to S44 to stop the electric pump 34 and to turn on a replacement completion flag F.

If negative determination is made at S48, or if the processing at S26, S40, or S44 is completed, this series of processings is temporarily ended.

As above, in the present embodiment, the cooling water of the inter cooler 18 can be replaced with the low-temperature cooling water prepared in the storage tank 42. In the above embodiments, the ECU 60 may correspond to a flow rate setting means, operating means, target value setting means, feedback operating means, preparing means, or replacing means. The storage tank 42 may correspond to a storing means. The compressor 44, the condenser 46, the A/C valve 52, the LT cooling valve 54, and the LT-side evaporator 58 may correspond to a cooling means.

Modifications of the above-described embodiments will be described below. The above embodiments may be put in execution through the following modifications.

In the above embodiments, the pump that can continuously variably set the flow rate of cooling water is employed for the electric pump 34. However, the electric pump 34 is not limited to this pump. For example, a pump that can variably set a flow rate of cooling water in stages may be employed. The pump is not limited to the electrically-operated pump, and an engine-driven pump, which is mechanically coupled with a crankshaft to be driven, may be used. In this case, the dischargeable maximum amount by the pump is made larger as the engine rotation speed becomes higher. Accordingly, an adjustment means, such as an electromagnetic valve, which can adjust an actual discharge amount in accordance with the output of the engine 10, may preferably be included.

In the above first embodiment, the engine load is not limited to the intake air amount, and for example, requested torque of the engine 10 may be employed. The requested torque of the engine 10 may be calculated based on the accelerator operation amount ACCP.

A calculation method for the FB flow rate Qd in the basic flow rate control processing is not limited to the method illustrated in the above first embodiment. For example, the FB flow rate Qd may be calculated based on the intake temperature (target intake temperature) and the IC outlet intake temperature required in making appropriate the combustion state of the engine 10 and the charging efficiency of the intake air. The calculation method of the FB flow rate Qd may be described below. First, the target intake temperature is variably set based on the engine load and the engine rotation speed NE. Specifically, the target intake temperature is set to be high if the output of the engine 10 is high. Then, the FB flow rate Qd is calculated by feedback control based on a temperature difference between the set target intake temperature and the IC outlet intake temperature.

In the above first embodiment, the basic flow rate control processing is executed through both open-loop control and closed-loop control. However, the basic flow rate control processing is not limited to these. For example, the basic flow rate control processing may be executed only through the open-loop control. Specifically, the base flow rate Qb may be set at the command flow rate Of

In the above first embodiment, the LT water temperature is estimated, but the LT water temperature does not always have to be estimated. For example, a sensor for detecting the LT water temperature (temperature of cooling water in the LT radiator 32, temperature at an outlet of the supercooling unit 32b of the LT radiator 32, or surface temperature of the LT radiator 32) may be provided. The LT water temperature may be calculated based on an output value of this sensor.

A setting method for the specified temperature To employed in the pre-acceleration replacement control processing is not limited to the method illustrated in the above first embodiment For example, the specified temperature Tβ may be set as a lower limit of the target IC inlet water temperature that can be set using the above-described steady map.

In the above first embodiment, both the return passage valve 38 and the bypass valve 40 may be closed during the processing at S32 or S34 in FIG. 5. Accordingly, the LT radiator 32 and the coolant passage connected to the radiator 32 can be blocked off from each other, and a degree of cooling of the cooling water in the LT radiator 32 is thereby made high. Moreover, both the return passage valve 38 and the bypass valve 40 may be opened during the acceleration time drive processing at S52.

In the above first embodiment, the fan drive processing may be performed during the processing for stopping the electric pump 34, which is the processing at S32 in FIG. 5.

A method for determining whether the travelling state of the vehicle is in an acceleration state is not limited to the method based on the accelerator operation amount ACCP and so forth. For example, if it is determined that at least one of an increase speed of the intake air amount (requested torque of the engine 10); an increase speed of the throttle opening degree; a rate of rise of supercharging pressure based on the output value of the supercharging pressure sensor 19; a rate of rise of the IC inlet intake temperature; a rate of rise of the engine rotation speed NE; and a rate of rise of the travel speed V of the vehicle, is larger than a specified speed, it may be determined that the vehicle is in an acceleration state. By using these parameters, circumstances where the output of the internal combustion engine increases can be appropriately grasped.

A method for determining whether the replacement of the cooling water in the inter cooler 18 has been completed is not limited to the method illustrated in the above first embodiment. For example, a sensor for detecting the temperature of cooling water flowing out of the inter cooler 18 (IC outlet water temperature) may be provided; and based on the IC outlet water temperature based on the output value from this sensor and the IC inlet water temperature being equal to or smaller than the specified temperature Tβ, it may be determined that the replacement of cooling water has been completed. In addition, for example, it may be determined that the replacement of cooling water has been completed based on the determination that the electric pump 34 has been driven for a predetermined time (fixed value) since the travelling state is determined to be in a stop state (positive determination at S36 in FIG. 5).

In the above first embodiment, when the output of the engine 10 is high, the target IC inlet water temperature is set to be high. However, this may not always be the case. For example, if a degree of cooling of the cooling water in the LT circuit can be made high through the execution of the above-described cold energy supply processing at the time of the basic flow rate control processing, the target IC inlet temperature may be constant regardless of the output of the engine 10.

In the above first embodiment, instead of the condition that the vehicle is in a deceleration state, a condition that the fuel cut control is in execution may be employed for the condition (A), which is the execution condition for the pre-acceleration replacement control processing. In this case, when brake operation is performed and the vehicle travels at a fixed speed on a downward slope, the pre-acceleration replacement control processing can be started.

In the above embodiments, processing for setting the flow rate of the electric pump 34 at a fixed value may be performed as substitute for the basic flow rate control processing. In this case, processing for stopping the electric pump 34 in a state in which temperature of cooling water of the engine 10 is low (cold state), such as immediately after the start of the engine 10 may preferably be executed.

In the above third embodiment, a means for cooling the cooling water in the storage tank 42 by the heat of refrigerant in the refrigeration cycle may be provided. By the cooling water in the storage tank 42 cooled by this means, the cooling water in the inter cooler 18 may be replaced.

The supercharger is not limited to the turbocharger that is driven with the energy of exhaust gas as its power source. The above supercharger may also be a supercharger that is driven with rotational energy of the crankshaft as its power source.

The vehicle to which the invention is applied is not limited to those having the water-cooled inter cooler 18 and LT radiator 32. For example, this vehicle, to which the invention is applied, may also be a vehicle including an air-cooled inter cooler; and an electric-powered fan that regulates the amount of air (air volume) passing through the inter cooler to adjust the amount of heat drawn per unit time from the supercharged intake air. The basic flow rate control processing in this case will be described. First, a basic command air volume is calculated based on the travel speed of the vehicle (air volume of a travel wind), outdoor temperature, engine load, and engine rotation speed NE. Next, if the output of the engine 10 is high, the target intake temperature is set to be high. Then, FB air volume is calculated by feedback control based on a temperature difference between the IC outlet intake temperature and target intake temperature; and a final command air volume is calculated as an additional value of the basic command air volume and the FB air volume. Lastly, based on the final command air volume, energizing operation of the electric-powered fan is carried out. In addition, the air-cooled inter cooler, the EG radiator, and the condenser 46 may be arranged close to each other to share this electric-powered fan for the heat release from these heat exchangers.

For example, if the engine operation state is in a transient state, depending on the temperature of cooling fluid, a combustion state of the internal combustion engine may not be satisfactory because of the flow rate of cooling fluid set by the flow rate setting means. Accordingly, in the above-described invention, the target value is variably set based on the engine operation state, and the actuator is operated to feedback control the actual value at the target value. As a result, a discrepancy between the flow rate of cooling fluid set by the flow rate setting means and the amount required to make the combustion state satisfactory can be compensated, and eventually, accuracy in adjustment of the intake temperature can be further improved.

When the flow rate of cooling water flowing through the inter cooler becomes high, or the temperature of this cooling water becomes low, the amount of heat drawn from the intake air becomes large by the promotion of heat exchange between the cooling water and the supercharged intake air in the inter cooler. Accordingly, in the above-described invention, the water pump is operated to set an actual flow rate of cooling water at the flow rate, which is set by the flow rate setting means, or to feedback-control the actual value of the temperature of the cooled intake air or temperature of cooling water flowing through the inter cooler at the target value. As a result, the intake temperature can be regulated appropriately.

In the above-described invention, the low-temperature cooling water to be supplied to the inter cooler is prepared under condition of the output of the internal combustion engine being the specified output or lower. Then, prior to the increase of the output of the engine, the water pump is operated in the above-described manner by the replacing means. Accordingly, when the vehicle is thereafter put into the acceleration state from the low speed area, the system can be put into a state in which the low=temperature cooling water remains as much as possible in the inter cooler, and the amount of heat that the cooling water conducts heat away from the intake air can thereby be increased. As a result, in the acceleration state from the low speed area, charging efficiency of the intake air can be improved, and eventually, driveability of the vehicle can be improved suitably.

If a degree of excess of the actual value of the temperature of intake air cooled in the inter cooler or temperature of cooling water flowing through the inter cooler over the target value is high, the amount of heat taken away from the intake air in the inter cooler may be greatly decreased when the travelling state of the vehicle is thereafter put into an acceleration state from the low speed area. In this case, the increase of the temperature of intake air supplied to the internal combustion engine cannot be appropriately curbed, and a degree of reduction in charging efficiency of intake air may thereby be marked. In this respect, in the above-described invention, the low-temperature cooling water is prepared by the preparing means under the circumstance in which the degree of excess of the actual value over the target value is high. Accordingly, the possibility that the amount of heat conducted away from the intake air may be greatly reduced when the vehicle is thereafter put into the acceleration state from the low speed area, can be ruled out by the replacement of cooling water in the inter cooler by the low-temperature cooling water.

In the above-described invention, by forcibly reducing the flow rate of cooling water, a heat release time of cooling water that has flowed into the radiator can be lengthened, and a degree of reduction in temperature of the cooling water in the radiator can thereby be made high. Accordingly, the low-temperature cooling water can be prepared appropriately.

In the above-described invention, by setting a flow rate of cooling water at 0 (zero) by the stop of the water pump, the degree of reduction in temperature of the cooling water in the radiator can be even higher.

If the state of the output of the internal combustion engine being high is continued, heat exchanging quantity between the intake air and cooling water in the inter cooler becomes large, and the temperature of cooling water thereby becomes high. The temperature of cooling water does not immediately decrease due to the magnitude of the heat capacity of cooling water. Therefore, the amount of heat taken away from the intake air in the inter cooler may be greatly reduced when the vehicle is thereafter put into the acceleration state from the low speed area. In this respect, in the above-described invention, the low-temperature cooling water is prepared by the preparing means with the condition that a state in which the output of the engine is equal to or larger than a predetermined value is continued for a predetermined time or longer. Accordingly, the subsequent possibility of great decrease of the amount of heat taken away from the intake air can be disregarded by the replacement of the cooling water in the inter cooler by the low-temperature cooling water.

It is found through the experiment or the like that, when the temperature of cooling water in the inter cooler is reduced by 3 degrees through the operation of the water pump by the replacing means, acceleration responsiveness of the vehicle can be improved to the extent that the driver of the vehicle can feel it. In view of this regard, in the above-described invention, the temperature of cooling water in the inter cooler is decreased by at least 3 degrees through the operation processing. Accordingly, driveability of the vehicle when the vehicle is put into the acceleration state from the low speed area can be suitably improved.

In the above-described invention, by providing the supercooling unit, a degree of reduction in temperature of cooling water flowing out of the radiator is made even higher. Accordingly, the low-temperature cooling water can be prepared appropriately.

In the above-described invention, by providing the storing means, for example, low-temperature cooling water can be always prepared.

In the above-described invention, the cooling water cooled by the heat generated in the refrigeration cycle is prepared for the low-temperature cooling water. Accordingly, temperature of the cooling water prepared can be further reduced.

The amount of air passing through the radiator becomes large when the rotational speed of the fan is increased. Accordingly, heat release of the cooling water in the radiator is promoted, and a degree of reduction in temperature of the cooling water in the radiator is thereby made high. In view of this regard, in the above-described invention, low-temperature cooling water can be prepared appropriately in the radiator by the forcible increase of the rotational speed of the fan.

Additional advantages and modifications will readily occur to those skilled in the art. The invention in its broader terms is therefore not limited to the specifics details, representative apparatus, and illustrative examples shown and described.

## Claims

1. An intake temperature control device for an internal combustion engine (10), the control device adapted for a vehicle including:
a supercharger (28) configured to supercharge intake air;
an inter cooler (18) configured to cool the supercharged intake air through heat exchange between the supercharged intake air and cooling fluid;
the engine (10) to which the cooled intake air is supplied;
a first radiator configured to release heat from cooling water which cools the engine (10);
an actuator (34) configured to regulate a flow rate (Qf) of the cooling fluid to adjust an amount of heat taken per unit time away from the supercharged intake air in the inter cooler (18); and
a second radiator (32) provided exclusively for the inter cooler (18) and configured to perform heat release from the cooling fluid, whose heat has been exchanged with the supercharged intake air, by means of a wind blown into the vehicle due to travel of the vehicle,
**characterized by**
the control device comprising:
a flow rate setting means (60) for setting the flow rate (Qf) of the cooling fluid at a larger value as an output of the engine (10) becomes higher, provided that a request to cool the intake air, which is supplied to the engine (10), is made; and
an operating means (60) for operating the actuator (34) in order that an actual flow rate of the cooling fluid reaches the flow rate (Qf) which is set by the flow rate setting means (60).

2. The intake temperature control device according to claim 1, further comprising a target value setting means (60) for variably setting a target value of one of: a temperature of the cooled intake air; and a value of a parameter correlated therewith, based on an operational state of the engine (10), wherein the operating means (60) includes a feedback operating means (60) for operating the actuator (34) to feedback-control an actual value of the one of: the temperature of the cooled intake air; and the value of the parameter correlated therewith, to reach the target value.

3. The intake temperature control device according to claim 1 or 2, wherein:
the inter cooler (18) is a water-cooled inter cooler configured to cool the supercharged intake air through its heat exchange with cooling water, which serves as the cooling fluid to flow through the water-cooled inter cooler;
and
the actuator (34) is a water pump (34) configured to regulate the flow rate (Qf) of the cooling water flowing through the inter cooler (18).

4. The intake temperature control device according to claim 3, further comprising:
a preparing means (60) for preparing low-temperature cooling water, which is to be supplied to the inter cooler (18) under condition of the output of the engine (10) being equal to or lower than a specified output; and
a replacing means (60) for replacing the cooling water in the inter cooler (18) with the cooling water prepared by the preparing means (60) prior to increase of the output of the engine (10) and for operating the water pump (34) to limit an amount (Qf) of the cooling water flowing into and out of the inter cooler (18).

5. The intake temperature control device according to claim 4, wherein:
the parameter correlated with the temperature of the cooled intake air includes a temperature of the cooling water flowing through the inter cooler (18); and
the preparing means (60) prepares the low-temperature cooling water under condition of the actual value exceeding the target value by a specified value (ΔTα).

6. An intake temperature control device for an internal combustion engine (10), the control device adapted for a vehicle including:
a supercharger (28) configured to supercharge intake air;
a water-cooled inter cooler (18) configured to cool the supercharged intake air through heat exchange between the supercharged intake air and cooling water;
the engine (10) to which the cooled intake air is supplied;
a first radiator configured to release heat from cooling water which cools the engine (10);
a second radiator (32) provided exclusively for the inter cooler (18) and configured to perform heat release from the cooling water, whose heat has been exchanged with the supercharged intake air, by means of a wind blown into the vehicle due to travel of the vehicle; and
a water pump (34) configured to regulate a flow rate (Qf) of the cooling water flowing through the inter cooler (18), **characterized by**
the control device comprising:
a preparing means (60) for preparing low-temperature cooling water, which is to be supplied to the inter cooler (18), under condition of an output of the engine (10) being equal to or lower than a specified output; and
a replacing means (60) for replacing the cooling water in the inter cooler (18) with the cooling water prepared by the preparing means (60) prior to increase of the output of the engine (10) and for operating the water pump (34) to limit an amount (Qf) of the cooling water flowing into and out of the inter cooler (18).

7. The intake temperature control device according to any one of claims 4 to 6, wherein the preparing means (60) prepares the low-temperature cooling water in the second radiator (32) by operating the water pump (34) to forcibly reduce the flow rate (Qf) of the cooling water.

8. The intake temperature control device according to claim 7, wherein the preparing means (60) prepares the low-temperature cooling water in the second radiator (32) by stopping the water pump (34) to forcibly set the flow rate (Qf) of the cooling water at 0.

9. The intake temperature control device according to any one of claims 4 to 8, wherein the preparing means (60) prepares the low-temperature cooling water under condition of continuation of a state in which the output of the engine (10) is equal to or higher than a predetermined output (W) for a predetermined period or longer.

10. The intake temperature control device according to any one of claims 4 to 9, wherein the replacing means (60) reduces a temperature of the cooling water in the inter cooler (18) by at least 3°C through the operation of the water pump (34) to limit the amount (Qf) of the cooling water.

11. The intake temperature control device according to any one of claims 4 to 10, wherein the increase of the output of the engine (10) means that at least one of:
a speed of acceleration-side change of an operation amount (ACCP) of an accelerator pedal of the vehicle;
an increasing speed of requested torque of the engine (10);
an increasing speed of an opening degree of a throttle valve (16) that is configured to regulate a flow passage area of an intake passage (12) of the engine (10);
an increasing speed of an amount of the intake air supplied to the engine (10);
an increasing speed of a supercharging pressure of the intake air supercharged by a turbocharger (28), which serves as the supercharger (28);
an increasing speed of a temperature of the intake air supercharged;
an increasing speed of a rotation speed (NE) of the engine (10); and
an increasing speed of a travel speed (V) of the vehicle, is larger than a specified speed (Vβ).

12. The intake temperature control device according to any one of claims 4 to 11, wherein:
the second radiator (32) includes:
a normal cooling unit (32a) configured to perform heat release from the cooling water flowing into the second radiator (32); and
a supercooling unit (32b) configured to further perform the heat release from the cooling water, whose heat has been exchanged with the wind in the normal cooling unit (32a); and
the preparing means (60) prepares the cooling water cooled in the supercooling unit (32b) as the low-temperature cooling water.

13. The intake temperature control device according to any one of claims 4 to 12, wherein:
the vehicle further includes a storing means (42) for storing the cooling water cooled in the second radiator (32); and
the preparing means (60) prepares the cooling water stored by the storing means (42) as the low-temperature cooling water.

14. The intake temperature control device according to any one of claims 4 to 13, wherein:
the vehicle further includes:
a refrigeration cycle (B); and
a cooling means (44, 46, 52, 54, 58) for cooling the cooling water by heat generated in the refrigeration cycle (B); and
the preparing means (60) prepares the cooling water cooled by the cooling means (44, 46, 52, 54, 58) as the low-temperature cooling water.

15. The intake temperature control device according to any one of claims 4 to 14, wherein:
the vehicle further includes an electric-powered fan (48) that is rotated to regulate an amount of air passing through the second radiator (32); and
the preparing means (60) prepares the low-temperature cooling water in the second radiator (32) by forcibly increasing a rotational speed of the fan (48).

## Patentansprüche

1. Einlasstemperatursteuerungsvorrichtung für eine Brennkraftmaschine (10), wobei die Steuerungsvorrichtung für ein Fahrzeug angepasst ist, das Folgendes enthält:
einen Lader (28), der gestaltet ist, um Einlassluft aufzuladen;
einen Zwischenkühler (18), der gestaltet ist, um die aufgeladene Einlassluft durch einen Wärmeaustausch zwischen der aufgeladenen Einlassluft und einer Kühlflüssigkeit zu kühlen;
die Maschine (10), der die gekühlte Einlassluft zugeführt wird;
einen erster Radiator, der gestaltet ist, um Wärme von einem Kühlwasser freizusetzen, das die Maschine (10) kühlt;
ein Stellglied (34), das gestaltet ist, um eine Durchflussrate (Qf) der Kühlflüssigkeit zu regulieren, um einem Wärmemenge einzustellen, die pro Zeiteinheit von der aufgeladenen Einlassluft in dem Zwischenkühler (18) weggenommen wird; und
einen zweiten Radiator (32), der ausschließlich für den Zwischenkühler (18) vorgesehen ist und gestaltet ist, um eine Wärmeabgabe von der Kühlflüssigkeit, deren Wärme mit der aufgeladenen Einlassluft ausgetauscht wurde, mittels eines Windes durchzuführen, der aufgrund einer Fortbewegung des Fahrzeugs in das Fahrzeug geblasen wird,
**dadurch gekennzeichnet, dass**
die Steuerungsvorrichtung Folgendes aufweist:
eine Durchflussrateneinstellungseinrichtung (60) zum Einstellen der Durchflussrate (Qf) der Kühlflüssigkeit auf einen größeren Wert, wenn eine Leistungsabgabe der Maschine (10) höher wird, vorausgesetzt, dass eine Anfrage gestellt ist, die der Maschine (10) zugeführte Einlassluft zu kühlen; und
eine Betriebseinrichtung (60) zum Betreiben des Stellglieds (34), damit eine tatsächliche Durchflussrate der Kühlflüssigkeit die durch die Durchflussrateneinstellungseinrichtungen (60) eingestellte Durchflussrate (Qf) erreicht.

2. Einlasstemperatursteuerungsvorrichtung gemäß Anspruch 1, des Weiteren mit einer Sollwerteinstellungseinrichtungen (60) zum variablen Einstellen eines Sollwerts von einem von: einer Temperatur der gekühlten Einlassluft; und einem Wert eines damit korrelierenden Parameters, basierend auf einen Betriebszustand der Maschine (10), wobei die Betriebseinrichtung (60) eine Rückführungsbetriebseinrichtung (60) zum Betreiben des Stellglied (34) enthält, um einen tatsächlichen Wert von dem einen von: der Temperatur der gekühlten Einlassluft; und dem Wert des damit korrelierenden Parameters zu regeln, um den Sollwert zu erreichen.

3. Einlasstemperatursteuerungsvorrichtung gemäß Anspruch 1 oder 2 wobei:
der Zwischenkühler (18) ein wassergekühlter Zwischenkühler ist, der gestaltet ist, um die aufgeladene Einlassluft durch deren Wärmeaustausch mit einem Kühlwasser zu kühlen, das als die durch den wassergekühlten Zwischenkühler strömende Kühlflüssigkeit dient; und
das Stellglied (34) eine Wasserpumpe (34) ist, die gestaltet ist, um die Durchflussrate (Qf) des durch den Zwischenkühler (18) strömenden Kühlwassers zu regulieren.

4. Einlasstemperatursteuerungsvorrichtung gemäß Anspruch 3, des Weiteren mit:
einer Vorbereitungseinrichtung (60) zum Vorbereiten eines Niedertemperaturkühlwassers, das dem Zwischenkühler (18) unter einer Bedingung, dass die Leistungsabgabe der Maschine (10) gleich oder niedriger als eine vorgegebene Leistungsabgabe ist, zugeführt wird; und
einer Austauscheinrichtung (60) zum Austauschen des Kühlwassers in dem Zwischenkühler (18) mit dem durch die Vorbereitungseinrichtung (60) vorbereiteten Kühlwasser vor einer Erhöhung der Leistungsabgabe der Maschine (10) und zum Betrieb der Wasserpumpe (34), um eine Menge (Qf) des Kühlwassers zu begrenzen, die in und aus den Zwischenkühler (18) strömt.

5. Einlasstemperatursteuerungsvorrichtung gemäß Anspruch 4, wobei:
der mit der Temperatur der gekühlten Einlassluft korrelierende Parameter eine Temperatur des durch den Zwischenkühler (18) strömenden Kühlwassers enthält; und
die Vorbereitungseinrichtung (60) das Niedertemperaturkühlwasser unter einer Bedingung vorbereitet, dass der tatsächliche Wert den Sollwert um einen vorgegebenen Wert (ΔTα) übersteigt.

6. Einlasstemperatursteuerungsvorrichtung für eine Brennkraftmaschine (10), wobei die Steuerungsvorrichtung für ein Fahrzeug angepasst ist, das Folgendes enthält:
einen Lader (28), der gestaltet ist, um Einlassluft aufzuladen;
einen wassergekühlten Zwischenkühler (18), der gestaltet ist, um die aufgeladene Einlassluft durch einen Wärmeaustausch zwischen der aufgeladenen Einlassluft und einem Kühlwasser zu kühlen;
die Maschine (10), der die gekühlte Einlassluft zugeführt wird;
einen erster Radiator, der gestaltet ist, um Wärme von dem Kühlwasser freizusetzen, das die Maschine (10) kühlt;
einen zweiten Radiator (32), der ausschließlich für den Zwischenkühler (18) vorgesehen ist und gestaltet ist, um eine Wärmeabgabe von dem Kühlwasser, dessen Wärme mit der aufgeladenen Einlassluft ausgetauscht wurde, mittels eines Windes durchzuführen, der aufgrund einer Fortbewegung des Fahrzeugs in das Fahrzeug geblasen wird; und
eine Wasserpumpe (34), die gestaltet ist, um eine Durchflussrate (Qf) des durch den Zwischenkühler (18) strömenden Kühlwassers zu regulieren,
**dadurch gekennzeichnet, dass**
die Steuerungsvorrichtung Folgendes aufweist:
eine Vorbereitungseinrichtung (60) zum Vorbereiten eines Niedertemperaturkühlwassers, das dem Zwischenkühler (18) unter einer Bedingung, dass die Leistungsabgabe der Maschine (10) gleich oder niedriger als eine vorgegebene Leistungsabgabe ist, zugeführt wird; und
eine Austauscheinrichtung (60) zum Austauschen des Kühlwassers in dem Zwischenkühler (18) mit dem durch die Vorbereitungseinrichtung (60) vorbereiteten Kühlwasser vor einer Erhöhung der Leistungsabgabe der Maschine (10) und zum Betrieb der Wasserpumpe (34), um eine Menge (Qf) des Kühlwassers zu begrenzen, die in und aus den Zwischenkühler (18) strömt.

7. Einlasstemperatursteuerungsvorrichtung gemäß einem der Ansprüche 4 bis 6, wobei die Vorbereitungseinrichtung (60) das Niedertemperaturkühlwasser in dem zweiten Radiator (32) durch einen Betrieb der Wasserpumpe (34), um die Durchflussrate (Qf) des Kühlwassers zwangsweise zu reduzieren, vorbereitet.

8. Einlasstemperatursteuerungsvorrichtung gemäß Anspruch 7, wobei die Vorbereitungseinrichtung (60) das Niedertemperaturkühlwasser in dem zweiten Radiator (32) durch Anhalten der Wasserpumpe (34), um die Durchflussrate (Qf) des Kühlwassers zwangsweise auf 0 festzulegen, vorbereitet.

9. Einlasstemperatursteuerungsvorrichtung gemäß einem der Ansprüche 4 bis 8, wobei die Vorbereitungseinrichtung (60) das Niedertemperaturkühlwasser unter einer Bedingung einer Fortsetzung eines Zustands vorbereitet, in dem die Leistungsabgabe der Maschine (10) für eine vorbestimmte Zeitspanne oder länger gleich oder höher als eine vorbestimmte Leistungsabgabe (W) ist.

10. Einlasstemperatursteuerungsvorrichtung gemäß einem der Ansprüche 4 bis 9, wobei die Austauscheinrichtung (60) eine Temperatur des Kühlwassers in dem Zwischenkühler (18) durch den Betrieb der Wasserpumpe (34), um die Menge (Qf) des Kühlwassers zu begrenzen, um mindestens 3°C reduziert.

11. Einlasstemperatursteuerungsvorrichtung gemäß einem der Ansprüche 4 bis 10, wobei die Erhöhung der Leistungsabgabe der Maschine (10) bedeutet, dass mindestens eine von:
einer Geschwindigkeit einer beschleunigungsseitigen Änderung eines Betriebsbetrags (ACCP) eines Beschleunigungspedals des Fahrzeugs;
einer Erhöhungsgeschwindigkeit eines angefragten Drehmoments der Maschine (10);
einer Erhöhungsgeschwindigkeit eines Öffnungsgrad eines Drosselventils (16), das gestaltet ist, um einen Strömungskanalquerschnitt eines Einlasskanals (12) der Maschine (10) zu regulieren;
einer Erhöhungsgeschwindigkeit einer Menge der der Maschine (10) zugeführten Einlassluft;
einer Erhöhungsgeschwindigkeit eines Ladedrucks der Einlassluft, die durch einen Lader (28) aufgeladen wird, der als der Lader (28) dient;
einer Erhöhungsgeschwindigkeit einer Temperatur der aufgeladenen Einlassluft;
einer Erhöhungsgeschwindigkeit einer Drehzahl (NE) der Maschine (10); und
einer Erhöhungsgeschwindigkeit einer Fahrgeschwindigkeit (V) des Fahrzeugs,
größer als eine vorgegebene Geschwindigkeit (Vβ) ist.

12. Einlasstemperatursteuerungsvorrichtung gemäß einem der Ansprüche 4 bis 11, wobei:
der zweite Radiator (32) Folgendes enthält:
eine reguläre Kühleinheit (32a), die gestaltet ist, um eine Wärmeabgabe von dem in dem zweiten Radiator (32) strömenden Kühlwassers durchzuführen; und
eine Unterkühlungseinheit (32b), die gestaltet ist, um die Wärmeabgabe von dem Kühlwasser, dessen Wärme mit dem Wind in der regulären Kühleinheit (32a) ausgetauscht wurde, weiter durchzuführen; und
die Vorbereitungseinrichtung (60) das in der Unterkühlungseinheit (32b) gekühlte Kühlwasser als das Niedertemperaturkühlwasser vorbereitet.

13. Einlasstemperatursteuerungsvorrichtung gemäß einem der Ansprüche 4 bis 12, wobei:
das Fahrzeug des Weiteren eine Speichereinrichtung (42) zum Speichern des in dem zweiten Radiator (32) gekühlten Kühlwassers enthält; und
die Vorbereitungseinrichtung (60) das durch die Speichereinrichtung (42) gespeicherte Kühlwasser als das Niedertemperaturkühlwasser vorbereitet.

14. Einlasstemperatursteuerungsvorrichtung gemäß einem der Ansprüche 4 bis 13, wobei:
das Fahrzeug des Weiteren Folgendes enthält:
einen Kältemittelkreislauf (B); und
eine Kühleinrichtung (44, 46, 52, 54, 58) zum Kühlen des Kühlwassers durch in dem Kältemittelkreislauf (B) erzeugte Wärme; und
die Vorbereitungseinrichtung (60) das durch die Kühleinrichtung (44, 46, 52, 54, 58) gekühlte Kühlwasser als das Niedertemperaturkühlwasser vorbereitet.

15. Einlasstemperatursteuerungsvorrichtung gemäß einem der Ansprüche 4 bis 14, wobei:
das Fahrzeug des Weiteren einen elektrisch angetriebenen Lüfter (48) enthält, der gedreht wird, um eine durch den zweiten Radiator (32) hindurchgehende Menge von Luft zu regulieren; und
die Vorbereitungseinrichtung (60) das Niedertemperaturkühlwasser in dem zweiten Radiator (32) durch ein Zwangserhöhen einer Drehgeschwindigkeit des Lüfters (48) vorbereitet.

## Revendications

1. Dispositif de contrôle de température d'admission pour un moteur à combustion interne (10), le dispositif de contrôle adapté à un véhicule comprenant :
un surcompresseur (28) conçu pour suralimenter un air d'admission ;
un refroidisseur intermédiaire (18) conçu pour refroidir l'air d'admission suralimenté grâce à un échange thermique entre l'air d'admission suralimenté et le fluide de refroidissement ;
le moteur (10) dans lequel l'air d'admission refroidi est introduit ;
un premier radiateur conçu pour évacuer la chaleur de l'eau de refroidissement qui refroidit le moteur (10) ;
un actionneur (34) conçu pour réguler un débit (Qf) du fluide de refroidissement afin d'ajuster une quantité de chaleur prise par unité de temps dans l'air d'admission suralimenté dans le refroidisseur intermédiaire (18) ; et
un deuxième radiateur (32) prévu exclusivement pour le refroidisseur intermédiaire (18) et conçu pour réaliser une évacuation de chaleur du fluide de refroidissement, dont la chaleur a été échangée avec l'air d'admission suralimenté, au moins d'un vent soufflé dans le véhicule du fait du déplacement du véhicule,
**caractérisé par**
le dispositif de contrôle comprenant :
un moyen de réglage du débit (60) pour régler le débit (Qf) du fluide de refroidissement à une valeur supérieure lorsqu'une sortie du moteur (10) augmente, si une requête de refroidissement de l'air d'admission, qui est introduit dans le moteur (10), est émise ; et
un moyen de commande (60) pour commander l'actionneur (34) afin qu'un débit réel du fluide de refroidissement atteigne le débit (Qf) qui est réglé par le moyen de réglage de débit (60).

2. Dispositif de contrôle de température d'admission selon la revendication 1, comprenant en outre un moyen de réglage de valeur cible (60) pour le réglage variable d'une valeur cible d'un des éléments suivants : une température de l'air d'admission refroidi ; et une valeur d'un paramètre corrélé avec celle-ci, sur la base d'un état de fonctionnement du moteur (10), le moyen de commande (60) comprenant un moyen de commande de retour (60) pour commander l'actionneur (34) afin de contrôler en retour une valeur réelle d'un des éléments suivants : la température de l'air d'admission refroidi ; et la valeur du paramètre corrélé avec celle-ci afin d'atteindre la valeur cible.

3. Dispositif de contrôle de température d'admission selon la revendication 1 ou 2, dans lequel :
le refroidisseur intermédiaire (18) est un refroidisseur intermédiaire à eau conçu pour refroidir l'air d'admission suralimenté grâce à un échange thermique avec de l'eau de refroidissement, qui sert de fluide de refroidissement s'écoulant à travers le refroidisseur intermédiaire à eau ;
et
l'actionneur (34) est une pompe à eau (34) conçue pour réguler le débit (Qf) de l'eau de refroidissement s'écoulant à travers le refroidisseur intermédiaire (18).

4. Dispositif de contrôle de température d'admission selon la revendication 3, comprenant en outre :
un moyen de préparation (60) permettant de préparer une eau de refroidissement à basse température qui doit être introduite dans le refroidisseur intermédiaire (18) à la condition que la sortie du moteur (10) est égale ou inférieure à une sortie spécifiée ; et
un moyen de remplacement (60) permettant de remplacer l'eau de refroidissement dans le refroidisseur intermédiaire (18) par l'eau de refroidissement préparée par le moyen de préparation (60) avant d'augmenter la sortie du moteur (10) et permettant de commander la pompe à eau (34) pour limiter une quantité (Qf) de l'eau de refroidissement s'écoulant vers et hors du refroidisseur intermédiaire (18).

5. Dispositif de contrôle de température d'admission selon la revendication 4, dans lequel :
le paramètre corrélé avec la température de l'air d'admission refroidi comprend une température de l'eau de refroidissement s'écoulant à travers le refroidisseur intermédiaire (18) ; et
le moyen de préparation (60) prépare l'eau de refroidissement à basse température à la condition que la valeur réelle dépasse la valeur cible d'une valeur spécifiée (Δtα).

6. Dispositif de contrôle de température d'admission pour un moteur de combustion interne (10), le dispositif de contrôle adapté à un véhicule comprenant :
un surcompresseur (28) conçu pour suralimenter un air d'admission ;
un refroidisseur intermédiaire à eau (18) conçu pour refroidir l'air d'admission suralimenté grâce à un échange de chaleur entre l'air d'admission suralimenté et l'eau de refroidissement ;
le moteur (10) dans lequel l'air d'admission refroidi est introduit ;
un premier radiateur conçu pour évacuer la chaleur de l'eau de refroidissement qui refroidit le moteur (10) ;
un deuxième radiateur (32) prévu exclusivement pour le refroidisseur intermédiaire (18) et conçu pour réaliser une évacuation de chaleur de l'eau de refroidissement, dont la chaleur a été échangée avec l'air d'admission suralimenté, au moins d'un vent soufflé dans le véhicule du fait du déplacement du véhicule, et
une pompe à eau (34) conçue pour réguler un débit (Qf) de l'eau de refroidissement s'écoulant à travers le refroidisseur intermédiaire (18),
**caractérisé par**
le dispositif de contrôle comprenant :
un moyen de préparation (60) permettant de préparer une eau de refroidissement à basse température qui doit être introduite dans le refroidisseur intermédiaire (18) à la condition que la sortie du moteur (10) est égale ou inférieure à une sortie spécifiée ; et
un moyen de remplacement (60) permettant de remplacer l'eau de refroidissement dans le refroidisseur intermédiaire (18) par l'eau de refroidissement préparée par le moyen de préparation (60) avant d'augmenter la sortie du moteur (10) et permettant de commander la pompe à eau (34) pour limiter une quantité (Qf) de l'eau de refroidissement s'écoulant vers et hors du refroidisseur intermédiaire (18).

7. Dispositif de contrôle de température d'admission selon l'une des revendications 4 à 6, dans lequel le moyen de préparation (60) prépare l'eau de refroidissement à basse température dans le deuxième radiateur (32) en commandant la pompe à eau (34) pour réduire de manière forcée le débit (Qf) de l'eau de refroidissement.

8. Dispositif de contrôle de température d'admission selon la revendication 7, dans lequel le moyen de préparation (60) prépare l'eau de refroidissement à basse température dans le deuxième radiateur (32) en arrêtant la pompe à eau (34) pour régler de manière forcée le débit (Qf) de l'eau de refroidissement à 0.

9. Dispositif de contrôle de température d'admission selon l'une des revendications 4 à 8, dans lequel le moyen de préparation (60) prépare l'eau de refroidissement à basse température sous la condition de la continuation d'un état dans lequel la sortie du moteur (10) est égale ou supérieure à une sortie prédéterminée (W) pendant une période prédéterminée ou plus longtemps.

10. Dispositif de contrôle de température d'admission selon l'une des revendications 4 à 9, dans lequel le moyen de remplacement (60) réduit une température de l'eau de refroidissement dans le refroidisseur intermédiaire (18) d'au moins 3 °C grâce à la commande de la pompe à eau (34) afin de limiter la quantité (Qf) d'eau de refroidissement.

11. Dispositif de contrôle de température d'admission selon l'une des revendications 4 à 10, dans lequel l'augmentation de la sortie du moteur (10) signifie qu'au moins un des éléments suivants :
une vitesse de changement côté accélération d'une quantité d'actionnement (ACCP) d'une pédale d'accélérateur du véhicule ;
une vitesse en augmentation d'un couple requis du moteur (10) ;
une vitesse en augmentation d'un degré d'ouverture d'une vanne des gaz (16) qui est conçue pour réguler la surface d'un passage d'écoulement d'un passage d'admission (12) du moteur (10) ;
une vitesse en augmentation d'une quantité d'air d'admission introduite dans le moteur (10) ;
une vitesse en augmentation d'une pression de suralimentation de l'air d'admission suralimenté par un turbocompresseur (28), qui sert de surcompresseur (28) ;
une vitesse en augmentation d'une température de l'air d'admission suralimenté ;
une vitesse en augmentation d'une vitesse de rotation (NE) du moteur (10) ; et
une vitesse en augmentation d'une vitesse de déplacement (V) du véhicule, est supérieur à une vitesse spécifiée (Vβ).

12. Dispositif de contrôle de température d'admission selon l'une des revendications 4 à 11, dans lequel :
le deuxième radiateur (32) comprend :
une unité de refroidissement normale (32a) conçue pour réaliser une évacuation de chaleur de l'eau de refroidissement s'écoulant vers le deuxième radiateur (32) ; et
une unité de surrefroidissement (32b) conçues pour continuer l'évacuation de chaleur de l'eau de refroidissement dont la chaleur a été échangée avec le vent dans l'unité de refroidissement normale (32a) ; et
le moyen de préparation (60) prépare l'eau de refroidissement refroidie dans l'uniét de surrefroidissement (32b) en tant qu'eau de refroidissement à basse température.

13. Dispositif de contrôle de température d'admission selon l'une des revendications 4 à 12, dans lequel :
le véhicule comprend en outre un moyen de stockage (42) pour stocker l'eau de refroidissement refroidie dans le deuxième radiateur (32) ; et
le moyen de préparation (60) prépare l'eau de refroidissement stockée par le moyen de stockage (42) en tant qu'eau de refroidissement à basse température.

14. Dispositif de contrôle de température d'admission selon l'une des revendications 4 à 13, dans lequel :
le véhicule comprend en outre :
un cycle de réfrigération (B) ; et
un moyen de refroidissement (44, 46, 52, 54, 58) pour refroidir l'eau de refroidissement par la chaleur générée dans le cycle de réfrigération (B) ; et
le moyen de préparation (60) prépare l'eau de refroidissement refroidie par le moyen de refroidissement (44, 46, 52, 54, 58) en tant qu'eau de refroidissement à basse température.

15. Dispositif de contrôle de température d'admission selon l'une des revendications 4 à 14, dans lequel :
le véhicule comprend en outre un ventilateur électrique (48) qui tourne pour réguler une quantité d'air traversant le deuxième radiateur (32) ; et
le moyen de préparation (60) prépare l'eau de refroidissement à basse température dans le deuxième radiateur (32) en augmentant de manière forcée une vitesse de rotation du ventilateur (48).
